# EUROPEAN PATENT APPLICATION

(11) **EP 4 614 301 A1**
(43) Date of publication of application: **10.09.2025**
(21) Application number: 23901003.6
(22) Date of filing: 29.11.2023
(51) Int. Cl.: G06F 3/04842, G06F 3/01, G06F 3/0481, G06F 3/16, G06F 1/16, G06F 3/00, G06F 3/04847

(54) **WEARABLE DEVICE FOR CONTROLLING PLURALITY OF APPLICATIONS BY USING AREA IN WHICH PLURALITY OF APPLICATIONS ARE GROUPED, AND METHOD THEREOF**

(30) Priority: 06.12.2022 KR 20220169164; 23.12.2022 KR 20220183616
(71) Applicant: Samsung Electronics Co., Ltd., Suwon-si, Gyeonggi-do 16677 (KR)
(72) Inventor: LEE, Bona, Suwon-si, Gyeonggi-do 16677 (KR); NAM, Myoungwoo, Suwon-si, Gyeonggi-do 16677 (KR); SON, Dongil, Suwon-si, Gyeonggi-do 16677 (KR); LEE, Seungyong, Suwon-si, Gyeonggi-do 16677 (KR)
(74) Representative: Nederlandsch Octrooibureau
(86) International application number: PCT/KR2023/019471
(87) International publication number: WO 2024/122984

(57) **Abstract**

A processor of a wearable device, according to an embodiment, may display, on a display, an area comprising at least one parameter for controlling an application screen and a speaker. The processor may identify an input for connecting the application screen and the area to each other. After identifying the input, the processor may output, through the speaker, an audio signal having a volume included in the at least one parameter, in response to audio data corresponding to the application screen. The present document may be associated with a metaverse service for enhancing interconnectivity between an actual object and a virtual object. For example, the metaverse service may be provided through a network that is based on fifth generation (5G) and/or sixth generation (6G).

## Description

### [Technical Field]

The present disclosure relates to a wearable device and a method for controlling a plurality of applications using an area in which the plurality of applications are grouped.

### [Background Art]

In order to provide an enhanced user experience, an electronic device that provides an augmented reality (AR) service that displays information generated by a computer associated with an external object in real-world is being developed. The electronic device may be a wearable device that may be worn by a user. For example, the electronic device may be AR glasses and/or a head-mounted device (HMD).

### [Disclosure]

### [Technical Solution]

According to an embodiment, a wearable device may comprise a speaker, memory storing instructions, a display, and a processor. The instructions, when executed by the processor, may be configured to cause the wearable device to display, in the display, an application screen and an area in which one or more parameters to control the speaker are included. The instructions, when executed by the processor, may be configured to cause the wearable device to identify an input to connect the application screen and the area. The instructions, when executed by the processor, may be configured to cause the wearable device to, in response to audio data corresponding to the application screen after identifying the input, output, through the speaker, an audio signal having a volume included in the one or more parameters.

According to an embodiment, a method of a wearable device may comprise displaying, in a display of the wearable device, an application screen and an area in which one or more parameters to control a speaker of the wearable device are included. The method may comprise identifying an input to connect the application screen and the area. The method may comprise, in response to audio data corresponding to the application screen after identifying the input, outputting, through the speaker, an audio signal having a volume included in the one or more parameters.

According to an embodiment, a wearable device may comprise a camera, memory storing instructions, a display, a speaker, and a processor. The instructions, when executed by the processor, may be configured to cause the wearable device to, in a state of displaying a plurality of application screens on the display, identify an input for grouping the plurality of application screens. The instructions, when executed by the processor, may be configured to cause the wearable device to, in response to the input, display the plurality of application screens in an area to which the one or more parameters are assigned. The instructions, when executed by the processor, may be configured to cause the wearable device to control playback of audio signals provided from each of the plurality of application screens based on the one or more parameters.

According to an embodiment, a method of a wearable device may comprise, in a state of displaying a plurality of application screens on a display of the wearable device, identifying an input for grouping the plurality of application screens. The method may comprise, in response to the input, displaying the plurality of application screens in an area to which one or more parameters are assigned. The method may comprise controlling playback of audio signals provided in each of the plurality of application screens based on the one or more parameters.

### [Description of the Drawings]

FIG. 1 illustrates an example of an operation of controlling one or more application screens using an area displayed on a display by a wearable device according to an embodiment.
FIG. 2 illustrates an example of a block diagram of a wearable device according to an embodiment.
FIG. 3A illustrates an example of a perspective view of a wearable device according to an embodiment.
FIG. 3B illustrates an example of one or more hardware disposed in a wearable device according to an embodiment.
FIGS. 4A to 4B illustrate an example of an exterior of a wearable device according to an embodiment.
FIG. 5 illustrates an example of a flowchart of a wearable device according to an embodiment.
FIGS. 6A, 6B, 6C, and 6D illustrate an example of an operation performed by a wearable device based on an input connecting an area and an application screen according to an embodiment.
FIGS. 7A, 7B, 7C, and 7D illustrate an example of an operation of changing a parameter applied to application screens included in an area by a wearable device according to an embodiment.
FIGS. 8A to 8B illustrate an example of a flowchart of a wearable device according to an embodiment.
FIGS. 9A, 9B, and 9C illustrate an example of an operation in which a wearable device generates an area for a plurality of application screens according to an embodiment.
FIG. 10 illustrates an example of a flowchart of a wearable device according to an embodiment.
FIGS. 11A to 11B illustrate an example of an operation in which a wearable device generates an area based on an external space and/or a position of a user according to an embodiment.
FIG. 12 is an exemplary diagram of a network environment associated with a metaverse service.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

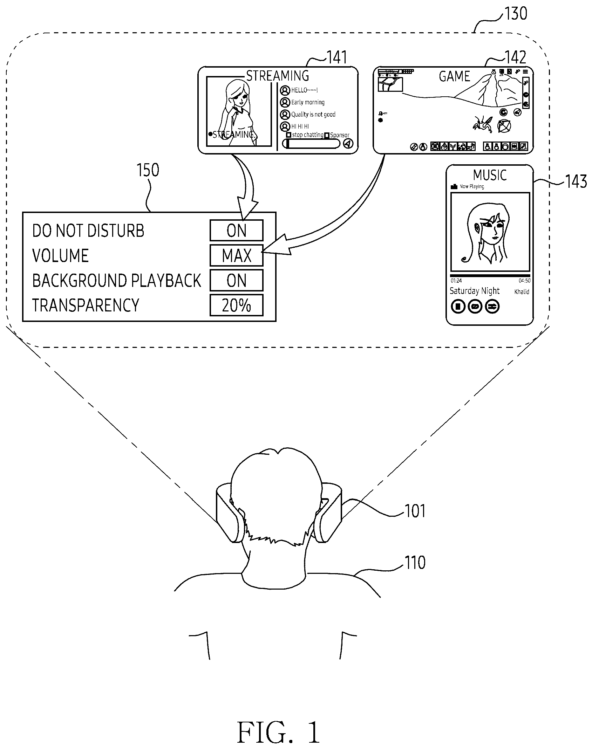

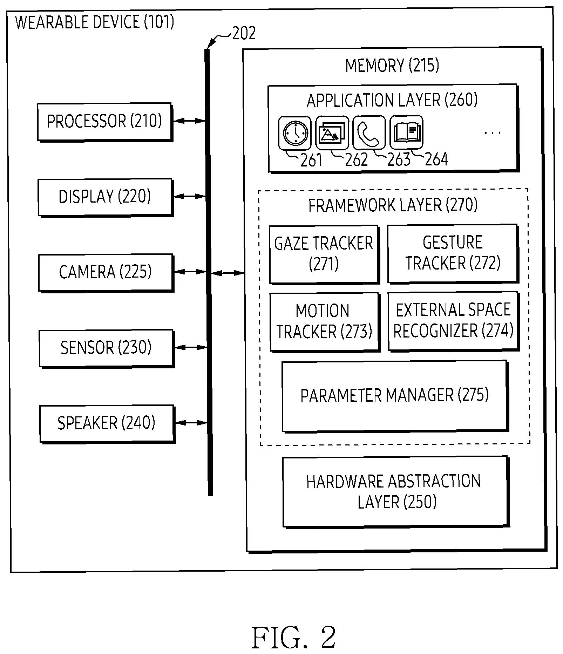

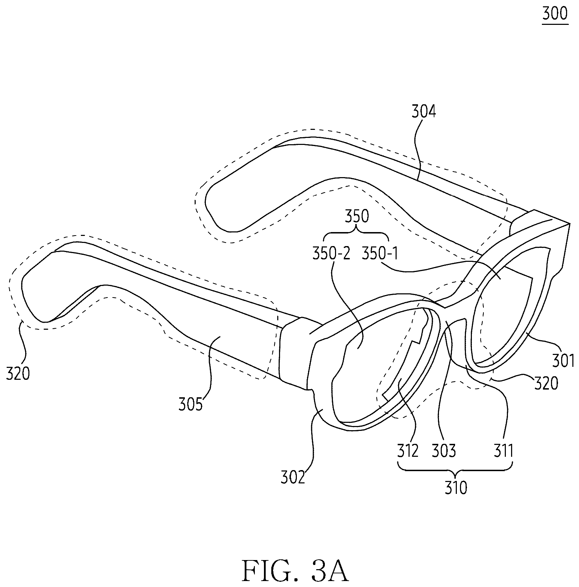

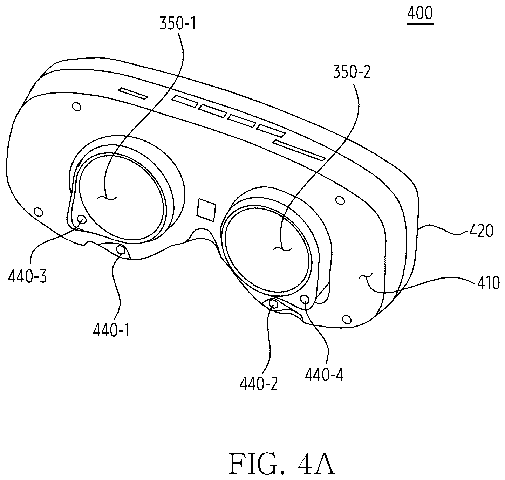

FIG. 1 illustrates an example of an operation of controlling one or more application screens using an area displayed on a display by a wearable device 101 according to an embodiment. In an embodiment, the wearable device 101 may include a head-mounted display (HMD) that is wearable on a head of a user 110. Although an external appearance of the wearable device 101 having a shape of glasses is illustrated, an embodiment is not limited thereto. An example of a structure of the wearable device 101 wearable on the head of the user 110 will be described with reference to FIGS. 3A to 3B and/or 4A to 4B. One or more hardware included in the wearable device 101 will be exemplarily described with reference to FIG. 2.

According to an embodiment, the wearable device 101 may execute a function associated with a video see-through (VST) and/or virtual reality (VR). Referring to FIG. 1, in a state that the user 110 wears the wearable device 101, the wearable device 101 may include a housing covering eyes of the user 110. The wearable device 101 may include a display disposed on a first surface of the housing facing the eyes in the state. The wearable device 101 may include a camera disposed on a second surface opposite to the first surface. The wearable device 101 may obtain frames including ambient light using the camera. The wearable device 101 may enable the user 110 to perceive the ambient light through the display by outputting the frames in the display disposed on the first surface. A display area 130 of the display disposed on the first surface may be formed by one or more pixels included in the display. The wearable device 101 may enable the user 110 to perceive a virtual object together with a real object perceived by the ambient light by synthesizing the virtual object in frames outputted through the display.

According to an embodiment, the wearable device 101 may execute a function associated with augmented reality (AR) and/or mixed reality (MR). In an embodiment of FIG. 1, in a state that the user 110 wears the wearable device 101, the wearable device 101 may include at least one lens disposed adjacent to the eyes of the user 110. The wearable device 101 may couple ambient light passing through a lens with light emitted from the display of the wearable device 101. The display area 130 of the display may be formed in a lens through which the ambient light passes. Since the wearable device 101 couples the ambient light and the light emitted from the display, the user 110 may view an image in which a real object perceived by the ambient light and a virtual object formed by the light emitted from the display are mixed.

Referring to FIG. 1, an example of the display area 130 formed by the wearable device 101 worn by the user 110 is illustrated. Since the display area 130 is formed in a field-of-view (FoV) of the user 110, the user 110 may view at least one virtual object included in the display area 130. In case that the wearable device 101 has a structure that enables ambient light to pass through toward the eyes of the user 110, the user 110 may simultaneously view the ambient light together with the at least one virtual object in the display area 130.

According to an embodiment, the wearable device 101 may display one or more application screens on the display based on an execution of at least one application. Referring to FIG. 1, the wearable device 101 may display a plurality of application screens 141, 142 and 143 on the display area 130 formed by the display. Each of the plurality of application screens 141, 142 and 143 may be a window and/or activity generated based on an execution of an application corresponding to the application screen.

According to an embodiment, the wearable device 101 may display, on the display, an area 150 for controlling at least one of a display option of an application screen and/or a playback option of an audio signal corresponding to the application screen. The display option may be set by one or more parameters associated with a transparency of the application screen, whether background playback is enabled, and/or a size. The playback option may be set by one or more parameters associated with a volume, and whether a haptic signal (e.g., vibration based on a haptic actuator) is outputted to replace the audio signal. Referring to FIG. 1, the wearable device 101 may display the area 150 on the display area 130 formed by the display.

According to an embodiment, the wearable device 101 may obtain a plurality of parameters associated with the application screen using the area 150. Referring to FIG. 1, the wearable device 101 may receive parameters associated with a mode (e.g., do not disturb mode), a volume, whether background playback is enabled, and a transparency to be applied to the application screen through the area 150. However, an embodiment is not limited thereto. In an exemplary case of FIG. 1, the wearable device 101 may identify that a preset mode (e.g., the do not disturb mode) for blocking a display of a notification message provided from an application corresponding to the application screen is activated through the area 150. In the case, the wearable device 101 may identify an input for adjusting the volume to a maximum value through the area 150. In the case, the wearable device 101 may identify an input for maintaining playback of a video included in the application screen and/or an audio corresponding to the video in a background state in which the application screen is not displayed. In the case, the wearable device 101 may identify an input for adjusting a transparency of the application screen to 20%.

According to an embodiment, the wearable device 101 may identify an input for connecting at least one of the application screens 141, 142 and 143 to the area 150 in an exemplary state of FIG. 1. The application screen connected to the area 150 by the input may inherit one or more parameters displayed through the area 150. For example, the wearable device 101 may change a transparency of at least one application screen connected to the area 150 to the transparency (e.g., 20%) in the area 150. Referring to FIG. 1, in response to an input of connecting the application screens 141 and 142 to the area 150, the wearable device 101 may change volumes of audio signals corresponding to the application screens 141 and 142 to a maximum value set by the area 150. Adjusting volumes of the audio signals associated with the application screens 141 and 142 by the wearable device 101 may be performed independently of adjusting a volume of an audio signal corresponding to the application screen 143. For example, the wearable device 101 may apply at least one parameter, including a volume included in the area 150, to the application screens 141 and 142 connected to the area 150 by the input, among the application screens 141, 142, and 143.

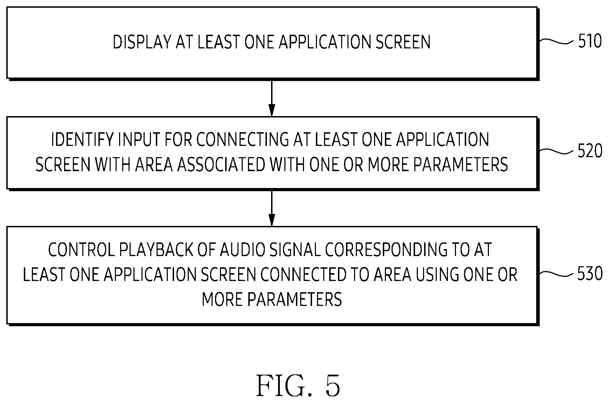

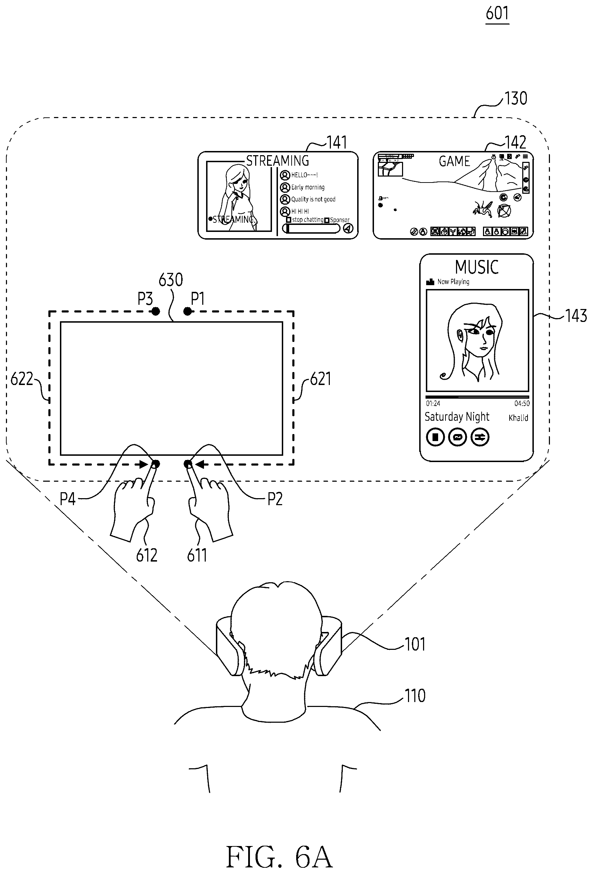

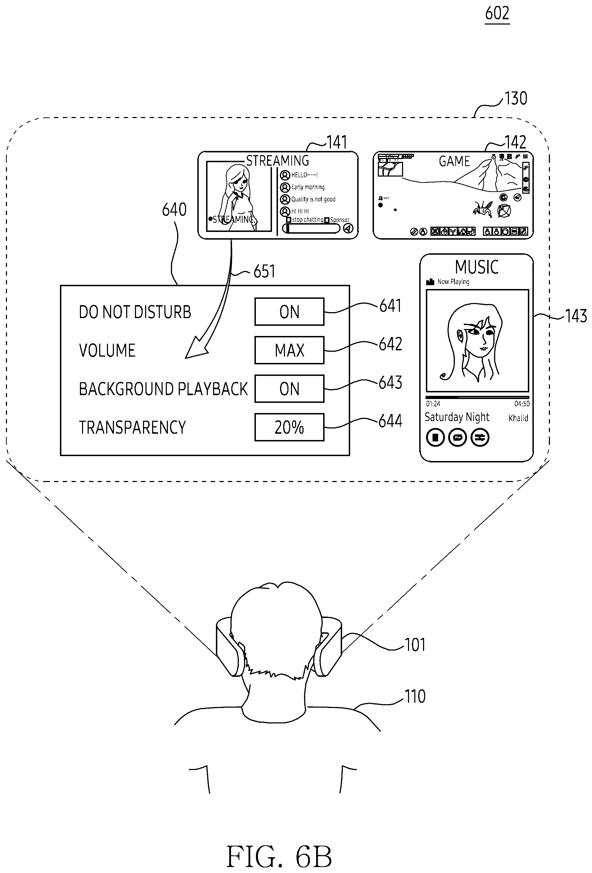

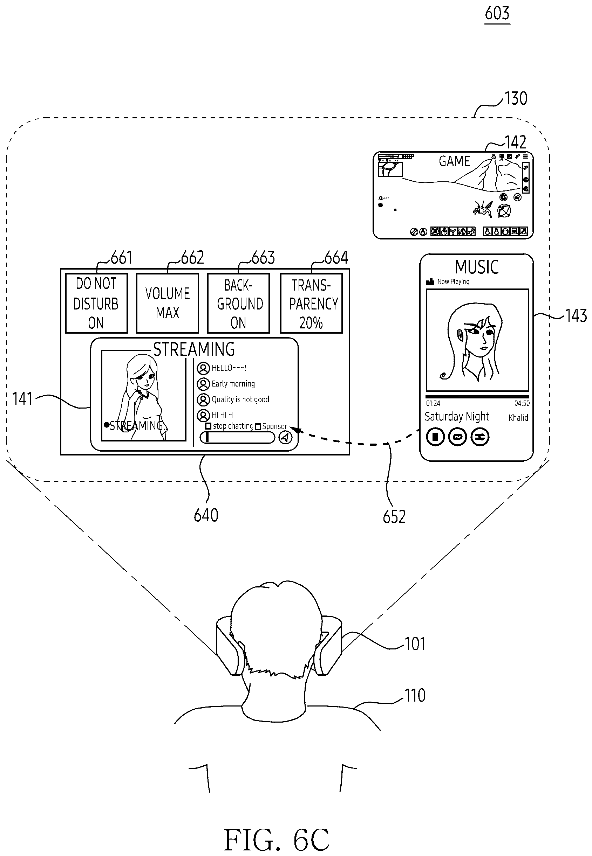

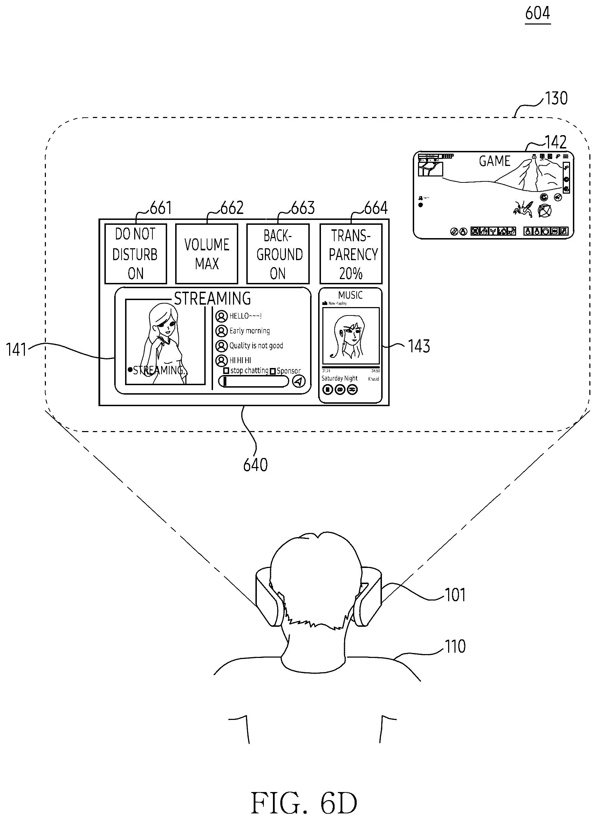

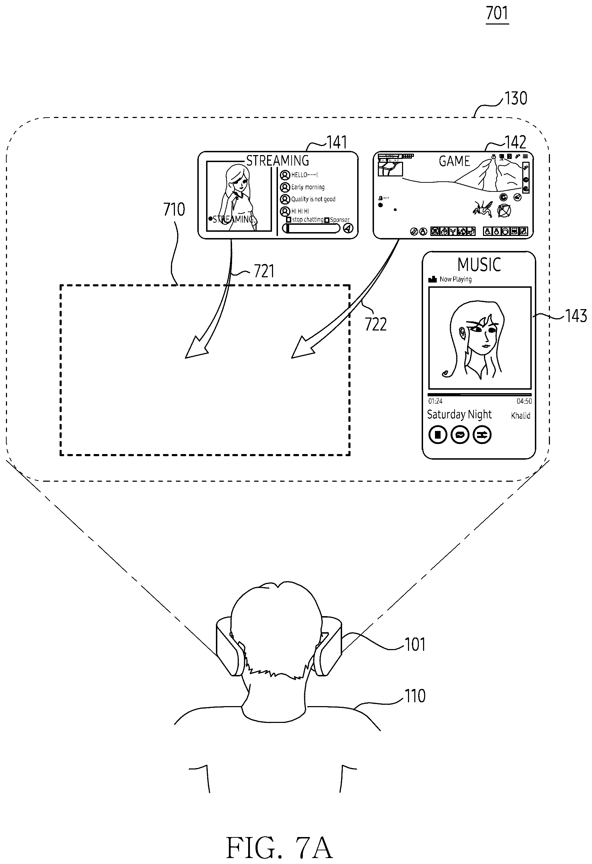

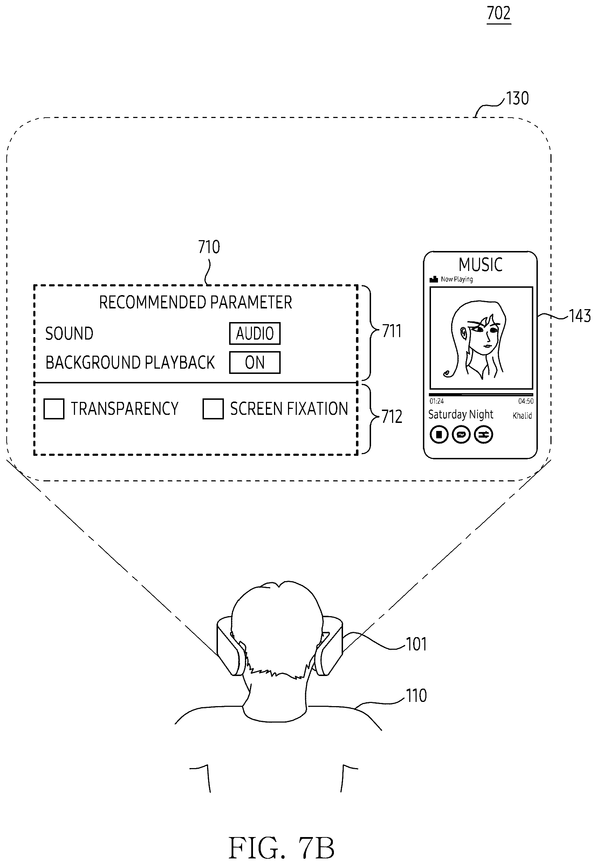

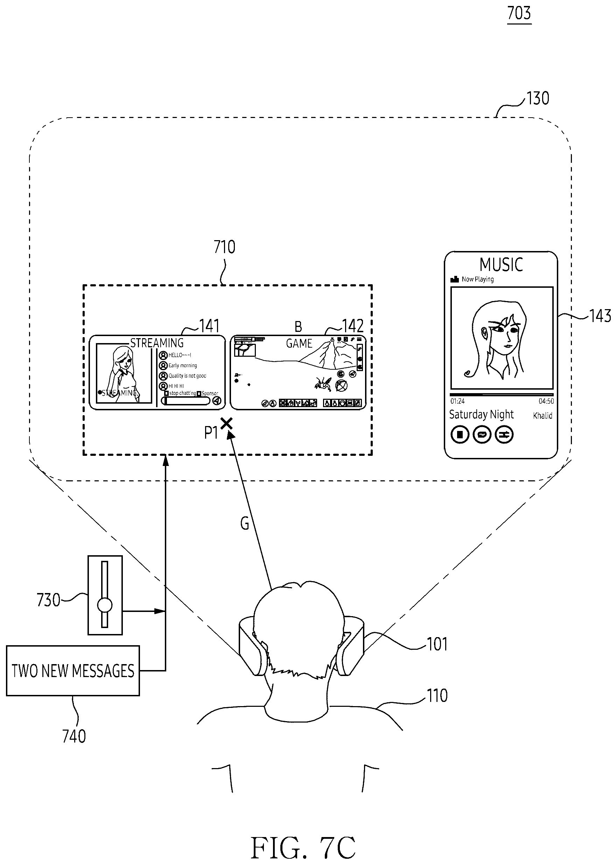

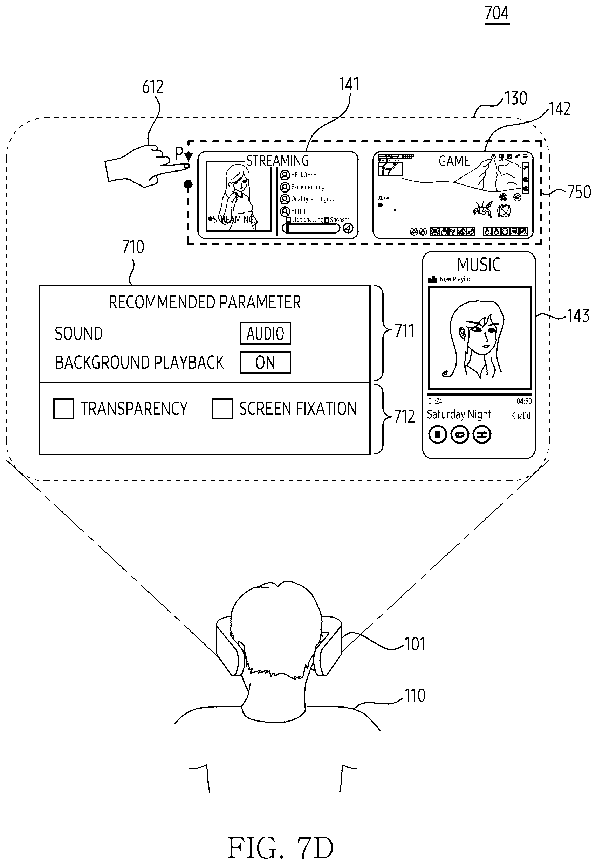

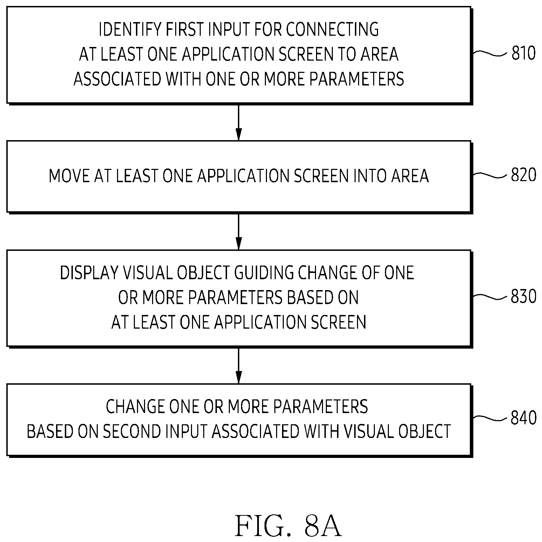

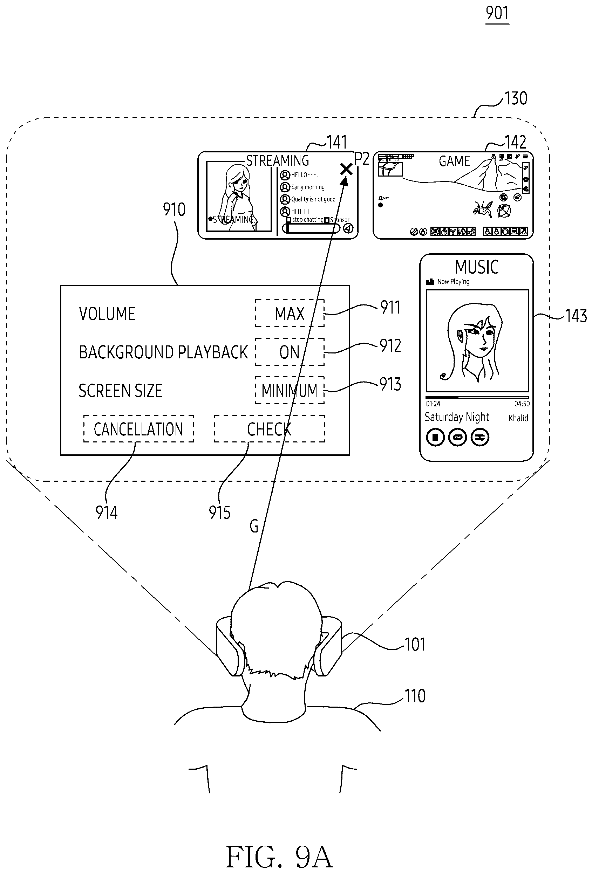

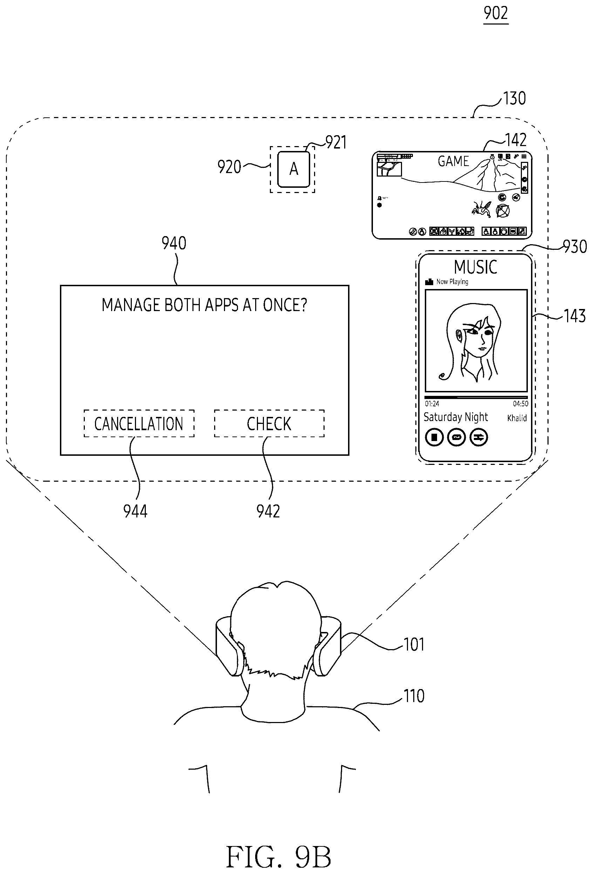

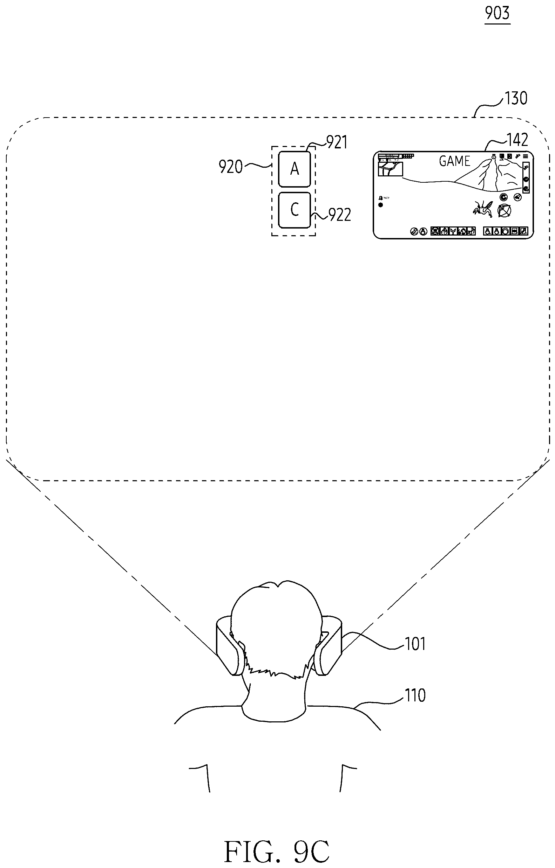

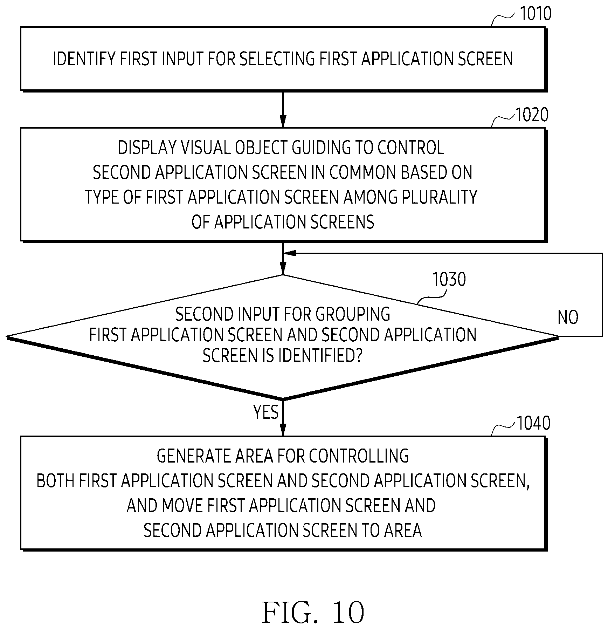

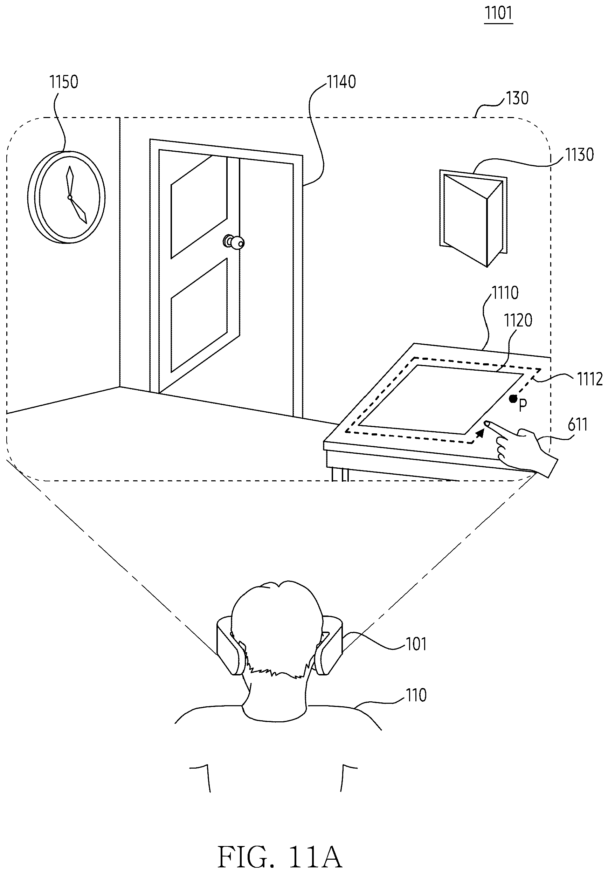

For example, the wearable device 101 may perform background playback of a video signal included in the application screens 141 and 142 and/or audio signals corresponding to the video based on the input connecting the application screens 141 and 142 and the area 150. According to an embodiment, an operation in which the wearable device 101 controls playback of audio signals corresponding to the application screens 141 and 142 connected to the area 150 will be described with reference to FIG. 5. According to an embodiment, an operation in which the wearable device 101 identifies an input for connecting the area 150 and the application screens 141 and 142 will be described with reference to FIGS. 6A, 6B, 6C, and 6D. According to an embodiment, an operation in which the wearable device 101 recommends a parameter commonly applied to the application screens 141 and 142 selected by the input will be described with reference to FIGS. 7A, 7B, 7C, and 7D, and/or 8A to 8B. According to an embodiment, an operation in which the wearable device 101 recommends a specific application to be grouped by the area 150 will be described with reference to FIGS. 9A, 9B, 9C, and/or 10C. According to an embodiment, an operation in which the wearable device 101 generates an area linked to an external space including the user 110 wearing the wearable device 101 and/or the wearable device 101 will be described with reference to FIGS. 11A to 11B.

As described above, according to an embodiment, the wearable device 101 may display the area 150 including one or more application screens (e.g., the application screens 141, 142 and 143) and one or more parameters for controlling the speaker of the wearable device 101. The wearable device 101 may identify an input connecting the application screen and the area 150. For example, the wearable device 101 may identify an input connecting the application screen and the area 150 using a camera of the wearable device 101. After identifying the input, the wearable device 101 may output an audio signal having a volume included in the one or more parameters through the speaker in response to audio data corresponding to the application screen. For example, the volume may be adjusted by a visual object included in the area 150. The visual object may mean an object that is deployable in a screen for transmission and/or interaction of information, such as text, an image, an icon, a video, a button, a check box, a radio button, a text box, and/or a table. The area 150 may include different options for controlling a display of the application screen and/or playback of the audio signal corresponding to the application screen. The wearable device 101 may comprehensively control a screen and/or an audio signal corresponding to at least one of the application screens 141, 142, and 143 using the area 150.

Hereinafter, an example of one or more hardware included in the wearable device 101 and/or a software application executed by the wearable device 101 according to an embodiment will be described with reference to FIG. 2.

FIG. 2 illustrates an example of a block diagram of a wearable device 101 according to an embodiment. The wearable device 101 of FIG. 2 may include the wearable device 101 of FIG. 1.

According to an embodiment, the wearable device 101 may include at least one of a processor 210, memory 215, a display 220, a camera 225, a sensor 230, or a speaker 240. The processor 210, the memory 215, the display 220, the camera 225, the sensor 230, and the speaker 240 may be electronically and/or operably coupled with each other by an electronical component such as a communication bus 202. Hereinafter, hardware being operably coupled may mean that a direct connection or an indirect connection between the hardware is established by wire or wirelessly, so that second hardware among the hardware is controlled by first hardware. Although illustrated based on different blocks, an embodiment is not limited thereto, and a portion (e.g., at least a portion of the processor 210 and the memory 215) of the hardware of FIG. 2 may be included in a single integrated circuit such as a system on a chip (SoC). A type and/or the number of hardware included in the wearable device 101 is not limited as illustrated in FIG. 2. For example, the wearable device 101 may include only a portion of a hardware component illustrated in FIG. 2.

According to an embodiment, the processor 210 of the wearable device 101 may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multi-core processor such as a dual core, a quad core, or a hexa core.

In an embodiment, the memory 215 of the wearable device 101 may include a hardware component for storing data and/or instruction inputted and/or outputted to the processor 210 of the wearable device 101. For example, the memory 215 may include volatile memory such as a random-access memory (RAM) and/or non-volatile memory such as a read-only memory (ROM). For example, the volatile memory may include at least one of a dynamic RAM (DRAM), a static RAM (SRAM), Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multi-media card (eMMC).

In an embodiment, the display 220 of the wearable device 101 may output visualized information (e.g., a screen of FIGS. 1, 6A, 6B, 6C, 6D, 7A, 7B, 7C, 9A, 9B, and 9C) to a user (e.g., the user 110 of FIG. 1). For example, the display 220 may output visualized information to the user by being controlled by the processor 210 including a circuit such as a graphic processing unit (GPU). The display 220 may include a flat panel display (FPD) and/or electronic paper. The FPD may include a liquid crystal display (LCD), a plasma display panel (PDP), and/or one or more light emitting diodes (LEDs). The LED may include an organic LED (OLED). The display 220 of FIG. 2 may include at least one display 350 to be described later with reference to FIGS. 3A to 3B and/or 4A to 4B.

In an embodiment, the camera 225 of the wearable device 101 may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in the camera 225 may be disposed in a form of 2 dimensional array. The camera 225 may generate 2 dimensional frame data corresponding to light reaching the optical sensors in the 2 dimensional array by obtaining electrical signals of each of the plurality of optical sensors substantially simultaneously. For example, photo data captured using the camera 225 may mean a 2 dimensional frame data obtained from camera 225. For example, video data captured using the camera 225 may mean a sequence of a plurality of 2 dimensional frame data obtained from the camera 225 along a frame rate. The camera 225 may be disposed toward a direction in which the camera 225 receives light, and may further include a flash light for outputting light toward the direction. Although the camera 225 is illustrated based on a single block, the number of cameras 225 included in the wearable device 101 is not limited to an embodiment. The wearable device 101 may include one or more cameras, such as one or more cameras 340 to be described later with reference to FIGS. 3A to 3B and/or 4A to 4B.

According to an embodiment, the sensor 230 of the wearable device 101 may generate electronic information that may be processed by the processor 210 and/or the memory 215 of the wearable device 101 from non-electronic information associated with the wearable device 101. The information may be referred to as sensor data. The sensor 230 may include a global positioning system (GPS) sensor for detecting a geographic location of the wearable device 101, an image sensor, an illumination sensor and/or a time-of-flight (ToF) sensor, and an inertial measurement unit (IMU) for detecting a physical motion of the wearable device 101.

In an embodiment, the speaker 240 of the wearable device 101 may output an audio signal by being controlled by the processor 210. In case of outputting an audio signal through the speaker 240, the processor 210 may control the speaker 240 by using a parameter corresponding to each audio signal. The parameter may include a volume, which is a parameter for controlling amplitude of an audio signal, and a playback mode (e.g., vibration mode and/or silent mode), which is a parameter associated with whether the audio signal is played. Although illustrated as a block, the wearable device 101 may include a plurality of speakers.

Although not illustrated, the wearable device 101 according to an embodiment may include output means for outputting information in a form other than a visualized form. For example, the wearable device 101 may include a motor for providing haptic feedback based on vibration.

Referring to an embodiment of FIG. 2, in the memory 215 of the wearable device 101, one or more instructions (or commands) indicating computation and/or an operation to be performed by the processor 210 of the wearable device 101 on data may be stored. A set of one or more instructions may be referred to as a program, a firmware, an operating system, a process, a routine, a sub-routine and/or an application. Hereinafter, an application being installed in an electronic device (e.g., the wearable device 101) may mean that one or more instructions provided in a form of an application are stored in the memory 215, and the one or more applications are stored in an executable format (e.g., a file having a extension preset by an operating system of the wearable device 101) by the processor of the electronic device.

Referring to FIG. 2, programs installed in the wearable device 101 may be classified into any one of different layers, including an application layer 260, a framework layer 270, and/or a hardware abstraction layer (HAL) 250, based on a target. For example, programs (e.g., a driver) designed to target hardware (e.g., the display 220, the camera 225, the sensor 230, and/or the speaker 240) of the wearable device 101 may be classified within the hardware abstraction layer 250. For example, in the framework layer 270, programs (e.g., a gaze tracker 271, a gesture tracker 272, a motion tracker 273, an external space recognizer 274, and/or a parameter manager 275) designed to target at least one of the hardware abstraction layer 250 and/or the application layer 260 may be classified. The programs classified as the framework layer 270 may provide an application programming interface (API) that is executable based on another program.

Referring to FIG. 2, a program designed to target a user (e.g., the user 110 of FIG. 1) who controls the wearable device 101 may be classified in the application layer 260. For example, a program classified as the application layer 260 may include at least one of a clock application 261 to output information (e.g., current time and/or alarm) for time, a gallery application 262 to view media content stored in the memory 215, a call application 263 to connect a phone, and/or a word processor application 264 to view and/or edit a document. An embodiment is not limited thereto. For example, a program classified as the application layer 260 may cause an execution of a function supported by programs classified as the framework layer 270 by calling an API.

Referring to FIG. 2, the wearable device 101 may process information associated with a gaze of the user wearing the wearable device 101 based on an execution of the gaze tracker 271 in the framework layer 270. For example, the wearable device 101 may obtain an image including eyes of the user from the camera 225. The wearable device 101 may identify a direction of a gaze of the user based on a position and/or a direction of a pupil included in the image.

Referring to FIG. 2, the wearable device 101 may identify motion of a preset body part including a hand based on an execution of the gesture tracker 272 in the framework layer 270. For example, the wearable device 101 may obtain frames including the body part from the camera 225. The wearable device 101 may identify a gesture performed by the preset body part based on the motion and/or a posture of the preset body part indicated by the frames.

Referring to FIG. 2, the wearable device 101 may identify the motion of the wearable device 101 based on an execution of the motion tracker 273 in the framework layer 270. In a state that the wearable device 101 is worn by the user, the motion of the wearable device 101 may be associated with motion of a head of the user. For example, the wearable device 101 may identify a direction of the wearable device 101 that substantially matches a direction of the head, as the direction D1 of FIG. 1. The wearable device 101 may identify the motion of the wearable device 101 based on sensor data of the sensor 230 including the IMU.

Referring to FIG. 2, the wearable device 101 may obtain information on an external space including the wearable device 101 or adjacent to the wearable device 101 based on an execution of the external space recognizer 274 in the framework layer 270. The wearable device 101 may obtain the information using the camera 225 and/or the sensor 230. Referring to FIG. 2, in a state that the external space recognizer 274 is executed, the wearable device 101 may identify a virtual space mapped to the external space based on the information obtained based on the external space recognizer 274. The wearable device 101 may identify a position and/or a direction of the wearable device 101 in the external space, based on the execution of the external space recognizer 274. For example, the wearable device 101 may perform a simultaneous localization and mapping (SLAM) to perceive the external space and the position of the wearable device 101 in the external space, based on an execution of the external space recognizer 274 and/or the motion tracker 273.

Referring to FIG. 2, the wearable device 101 may manage at least one parameter used for an execution of an application (or process) executed by the processor 210 based on an execution of the parameter manager 275 in the framework layer 270. The at least one parameter may be used to display an application screen, including a window and/or a widget provided from the application. The at least one parameter may be used to output audio data provided from the application. According to an embodiment, at least one parameter managed by the wearable device 101 based on the parameter manager 275 may be exemplarily classified as illustrated in Table 1. However, an embodiment is not limited thereto.

**[Table 1]**

| Parameter name | Description | Value (Example) |
|---|---|---|
| Notification | Whether a notification message is displayed | ON/OFF (boolean) |
| Volume | Amplitude of an audio signal outputted through a speaker | 0~100 (%) |
| Vibration | Whether it operates in vibration mode | ON/OFF (boolean) |
| Do not disturb | Whether output of an audio signal and/or haptic feedback is restricted | ON/OFF (boolean) |
| Background playback | Whether to cease playback of media content in an application screen according to whether the application screen is focused | ON/OFF (boolean) |
| Transparency | A transparency of an application screen | 0~100 (%) |
| Screen size | A size of an application screen | Minimum, maximum |
| Top-level fixation | Whether an application screen is obscured by other application screens | ON/OFF (boolean) |
| Allow sharing | Whether to display an application screen through an electronic device distinguished from a wearable device 101 | ON/OFF (boolean) |

Referring to Table 1, according to an embodiment, the wearable device 101 may determine whether to display a notification message generated by an execution of an application based on a parameter (e.g., a parameter having a name of "notification") corresponding to the application. For example, the wearable device 101 may determine whether to output audio data generated by the execution of the application based on a parameter having a name of "vibration" and/or a name of "do not disturb". Referring to Table 1, in case that a mode of the wearable device 101 is a vibration mode and/or a do not disturb mode, at least one of the exemplified parameters (e.g., the parameter having the name of "vibration" and/or the name of "do not disturb") may have an "ON" value. In case that at least one of the parameters has an "ON" value, the wearable device 101 may not control (e.g., bypass) the speaker 240 using the audio data. For example, in case that a parameter with the name "vibration" has an "ON" value, the wearable device 101 may output a haptic signal (e.g., vibration) instead of playing an audio signal by controlling a haptic actuator among the speaker 240 and/or the haptic actuator. For example, in case that the application screen is covered or the application screen is not included in the display 220, the wearable device 101 may control playback of media content included in the application screen based on a parameter having a name of "background playback". For example, the wearable device 101 may adjust the transparency (or an alpha value) of the application screen based on a parameter having a name of "transparency". For example, the wearable device 101 may adjust a size of the application screen based on a parameter having a name of "screen size". In case that the parameter having the name of "screen size" indicates a minimum size, the wearable device 101 may display an icon representing the application screen on the display 220. For example, the wearable device 101 may determine whether to overlap and display the application screen on other application screens based on a parameter having a name of "Top-level fixation". For example, the wearable device 101 may determine whether to transmit the application screen to another electronic device that is distinguished from the wearable device 101 based on a parameter having a name of "Allow Sharing".

According to an embodiment, the wearable device 101 may display an area (e.g., the area 150 of FIG. 1) associated with at least one of the parameters exemplified in Table 1 based on an execution of the parameter manager 275. In the area, the wearable device 101 may display at least one visual object for controlling at least one parameter associated with the area. The wearable device 101 may apply at least one parameter associated with the area to the application screen based on an input connecting at least one application screen displayed on the display 220 and the area. For example, in case that a plurality of application screens are connected to the area, the wearable device 101 may comprehensively control the plurality of application screens based on at least one parameter associated with the area. The input may be identified based on the processor 210 tracking a gesture performed by the user wearing the wearable device 101, based on an execution of the gesture tracker 272.

Hereinafter, according to an embodiment, an example of a form factor of the wearable device 101 will be described using FIGS. 3A to 3B and/or 4A to 4B.

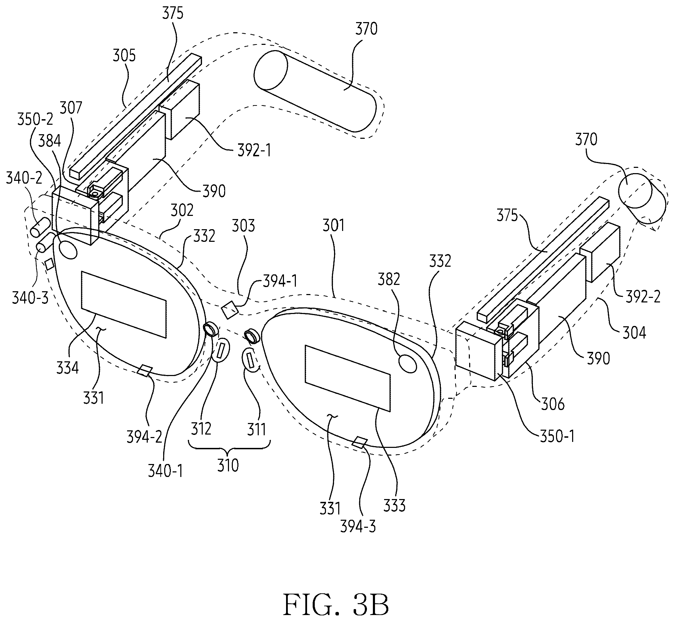

FIG. 3A illustrates an example of a perspective view of a wearable device according to an embodiment. FIG. 3B illustrates an example of one or more hardware positioned in a wearable device 300 according to an embodiment. The wearable device 101 of FIGS. 1 to 2 may include the wearable device 300 of FIGS. 3A to 3B. As shown in FIG. 3A, according to an embodiment, the wearable device 300 may include at least one display 350 and a frame supporting the at least one display 350.

According to an embodiment, the wearable device 300 may be wearable on a portion of the user's body. The wearable device 300 may provide augmented reality (AR), virtual reality (VR), or mixed reality (MR) combining the augmented reality and the virtual reality to a user wearing the wearable device 300. For example, the wearable device 300 may output a virtual reality image through at least one display 350, in response to a user's preset gesture obtained through a motion recognition camera 340-2 of FIG. 3B.

According to an embodiment, the at least one display 350 in the wearable device 300 may provide visual information to a user. The at least one display 350 may include the display 220 of FIG. 2. For example, the at least one display 350 may include a transparent or translucent lens. The at least one display 350 may include a first display 350-1 and/or a second display 350-2 spaced apart from the first display 350-1. For example, the first display 350-1 and the second display 350-2 may be disposed at positions corresponding to the user's left and right eyes, respectively.

Referring to FIG. 3B, the at least one display 350 may form a display area on the lens to provide a user wearing the wearable device 300 with visual information included in ambient light passing through the lens and other visual information distinct from the visual information. The lens may be formed based on at least one of a fresnel lens, a pancake lens, or a multi-channel lens. The display area formed by the at least one display 350 may be formed on the second surface 332 of the first surface 331 and the second surface 332 of the lens. When the user wears the wearable device 300, ambient light may be transmitted to the user by being incident on the first surface 331 and being penetrated through the second surface 332. According to an embodiment, the at least one display 350 may display a virtual reality image to be combined with a reality screen transmitted through ambient light. The virtual reality image outputted from the at least one display 350 may be transmitted to eyes of the user, through one or more hardware (e.g., optical devices 382 and 384, and/or at least one waveguides 333 and 334) included in the wearable device 300.

According to an embodiment, the wearable device 300 may include waveguides 333 and 334 that transmit light transmitted from the at least one display 350 and relayed by the at least one optical device 382 and 384 by diffracting to the user. The waveguides 333 and 334 may be formed based on at least one of glass, plastic, or polymer. A nano pattern may be formed on at least a portion of the outside or inside of the waveguides 333 and 334. The nano pattern may be formed based on a grating structure having a polygonal or curved shape. Light incident to an end of the waveguides 333 and 334 may be propagated to another end of the waveguides 333 and 334 by the nano pattern. The waveguides 333 and 334 may include at least one of at least one diffraction element (e.g., a diffractive optical element (DOE), a holographic optical element (HOE)), and a reflection element (e.g., a reflection mirror). For example, the waveguides 333 and 334 may be disposed in the wearable device 300 to guide a screen displayed by the at least one display 350 to the user's eyes. For example, the screen may be transmitted to the user's eyes through total internal reflection (TIR) generated in the waveguides 333 and 334.

According to an embodiment, the wearable device 300 may analyze an object included in a real image collected through a photographing camera 340-1, combine with a virtual object corresponding to an object that become a subject of augmented reality provision among the analyzed object, and display on the at least one display 350. The virtual object may include at least one of text and images for various information associated with the object included in the real image. The wearable device 300 may analyze the object based on a multi-camera such as a stereo camera. For the object analysis, the wearable device 300 may execute time-of-flight (ToF) and/or simultaneous localization and mapping (SLAM) supported by the multi-camera. The user wearing the wearable device 300 may watch an image displayed on the at least one display 350.

According to an embodiment, a frame may be configured with a physical structure in which the wearable device 300 may be worn on the user's body. According to an embodiment, the frame may be configured so that when the user wears the wearable device 300, the first display 350-1 and the second display 350-2 may be positioned corresponding to the user's left and right eyes. The frame may support the at least one display 350. For example, the frame may support the first display 350-1 and the second display 350-2 to be positioned at positions corresponding to the user's left and right eyes.

According to an embodiment, referring to FIG. 3A, according to an embodiment, the frame may include an area 320 at least partially in contact with the portion of the user's body in case that the user wears the wearable device 300. For example, the area 320 of the frame in contact with the portion of the user's body may include an area in contact with a portion of the user's nose, a portion of the user's ear, and a portion of the side of the user's face that the wearable device 300 contacts. According to an embodiment, the frame may include a nose pad 310 that is contacted on the portion of the user's body. When the wearable device 300 is worn by the user, the nose pad 310 may be contacted on the portion of the user's nose. The frame may include a first temple 304 and a second temple 305, which are contacted on another portion of the user's body that is distinct from the portion of the user's body.

According to an embodiment, the frame may include a first rim 301 surrounding at least a portion of the first display 350-1, a second rim 302 surrounding at least a portion of the second display 350-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the wearable device 300 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 300 may include hardware (e.g., hardware described above based on the block diagram of FIG. 2) that performs various functions. For example, the hardware may include a battery module 370, an antenna module 375, optical devices 382 and 384, speakers 392-1 and 392-2, microphones 394-1, 394-2, and 394-3, a depth sensor module (not illustrated), and/or a printed circuit board 390. Various hardware may be disposed in the frame.

According to an embodiment, the microphones 394-1, 394-2, and 394-3 of the wearable device 300 may obtain a sound signal, by being disposed on at least a portion of the frame. The first microphone 394-1 disposed on the nose pad 310, the second microphone 394-2 disposed on the second rim 302, and the third microphone 394-3 disposed on the first rim 301 are illustrated in FIG. 3B, but the number and disposition of the microphone 394 are not limited to an embodiment of FIG. 3B. In a case that the number of the microphone 394 included in the wearable device 300 is two or more, the wearable device 300 may identify a direction of the sound signal by using a plurality of microphones disposed on different portions of the frame.

According to an embodiment, the optical devices 382 and 384 may transmit a virtual object transmitted from the at least one display 350 to the wave guides 333 and 334. For example, the optical devices 382 and 384 may be projectors. The optical devices 382 and 384 may be disposed adjacent to the at least one display 350 or may be included in the at least one display 350 as a portion of the at least one display 350. The first optical device 382 may correspond to the first display 350-1, and the second optical device 384 may correspond to the second display 350-2. The first optical device 382 may transmit light outputted from the first display 350-1 to the first waveguide 333, and the second optical device 384 may transmit light outputted from the second display 350-2 to the second waveguide 334.

In an embodiment, a camera 340 may include an eye tracking camera (ET CAM) 340-1, a motion recognition camera 340-2 and/or the photographing camera 340-3. The photographing camera 340-3, the eye tracking camera 340-1, and the motion recognition camera 340-2 may be disposed at different positions on the frame and may perform different functions. The photographing camera 340-3, the eye tracking camera 340-1, and the motion recognition camera 340-2 may be an example of the camera 225 of FIG. 2. The eye tracking camera 340-1 may output data indicating a gaze of the user wearing the wearable device 300. For example, the wearable device 300 may detect the gaze from an image including the user's pupil, obtained through the eye tracking camera 340-1. An example in which the eye tracking camera 340-1 is disposed toward the user's right eye is illustrated in FIG. 3B, but the embodiment is not limited thereto, and the eye tracking camera 340-1 may be disposed alone toward the user's left eye or may be disposed toward two eyes.

In an embodiment, the photographing camera 340-3 may photograph a real image or background to be matched with a virtual image in order to implement the augmented reality or mixed reality content. The photographing camera may photograph an image of a specific object existing at a position viewed by the user and may provide the image to the at least one display 350. The at least one display 350 may display one image in which a virtual image provided through the optical devices 382 and 384 is overlapped with information on the real image or background including the image of the specific object obtained by using the photographing camera. In an embodiment, the photographing camera may be disposed on the bridge 303 disposed between the first rim 301 and the second rim 302.

In an embodiment, the eye tracking camera 340-1 may implement a more realistic augmented reality by matching the user's gaze with the visual information provided on the at least one display 350, by tracking the gaze of the user wearing the wearable device 300. For example, when the user looks at the front, the wearable device 300 may naturally display environment information associated with the user's front on the at least one display 350 at a position where the user is positioned. The eye tracking camera 340-1 may be configured to capture an image of the user's pupil in order to determine the user's gaze. For example, the eye tracking camera 340-1 may receive gaze detection light reflected from the user's pupil and may track the user's gaze based on the position and movement of the received gaze detection light. In an embodiment, the eye tracking camera 340-1 may be disposed at a position corresponding to the user's left and right eyes. For example, the eye tracking camera 340-1 may be disposed in the first rim 301 and/or the second rim 302 to face the direction in which the user wearing the wearable device 300 is positioned.

The motion recognition camera 340-2 may provide a specific event to the screen provided on the at least one display 350 by recognizing the movement of the whole or portion of the user's body, such as the user's torso, hand, or face. The motion recognition camera 340-2 may obtain a signal corresponding to motion by recognizing the user's gesture, and may provide a display corresponding to the signal to the at least one display 350. A processor may identify a signal corresponding to the operation and may perform a preset function based on the identification. In an embodiment, the motion recognition camera 340-2 may be disposed on the first rim 301 and/or the second rim 302.

According to an embodiment, the camera 340 included in the wearable device 300 is not limited to the above-described eye tracking camera 340-1 and the motion recognition camera 340-2. For example, the wearable device 300 may identify an external object included in the FoV by using a photographing camera 340-3 disposed toward the user's FoV. The wearable device 300 identifying the external object may be performed based on a sensor for identifying a distance between the wearable device 300 and the external object, such as a depth sensor and/or a time of flight (ToF) sensor. The camera 340 disposed toward the FoV may support an autofocus function and/or an optical image stabilization (OIS) function. For example, in order to obtain an image including a face of the user wearing the wearable device 300, the wearable device 300 may include the camera 340 (e.g., a face tracking (FT) camera) disposed toward the face.

Although not illustrated, the wearable device 300 according to an embodiment may further include a light source (e.g., LED) that emits light toward a subject (e.g., user's eyes, face, and/or an external object in the FoV) photographed by using the camera 340. The light source may include an LED having an infrared wavelength. The light source may be disposed on at least one of the frame, and the hinge units 306 and 307.

According to an embodiment, the battery module 370 may supply power to electronic components of the wearable device 300. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

In an embodiment, the antenna module 375 may transmit the signal or power to the outside of the wearable device 300 or may receive the signal or power from the outside. The antenna module 375 may be electrically and/or operably connected to communication circuitry in the wearable device 300. In an embodiment, the antenna module 375 may be disposed in the first temple 304 and/or the second temple 305. For example, the antenna module 375 may be disposed close to one surface of the first temple 304 and/or the second temple 305.

The speakers 392-1 and 392-2 may output a sound signal to the outside of the wearable device 300. A sound output module may be referred to as a speaker. In an embodiment, the speakers 392-1 and 392-2 may be disposed in the first temple 304 and/or the second temple 305 in order to be disposed adjacent to the ear of the user wearing the wearable device 300. For example, the wearable device 300 may include a second speaker 392-2 disposed adjacent to the user's left ear by being disposed in the first temple 304, and a first speaker 392-1 disposed adjacent to the user's right ear by being disposed in the second temple 305.

The light emitting module (not illustrated) may include at least one light emitting element. The light emitting module may emit light of a color corresponding to a specific state or may emit light through an operation corresponding to the specific state in order to visually provide information on a specific state of the wearable device 300 to the user. For example, when the wearable device 300 requires charging, it may emit repeatedly red light at a designated time. In an embodiment, the light emitting module may be disposed on the first rim 301 and/or the second rim 302.

Referring to FIG. 3B, according to an embodiment, the wearable device 300 may include the printed circuit board (PCB) 390. The PCB 390 may be included in at least one of the first temple 304 or the second temple 305. The PCB 390 may include an interposer disposed between at least two sub PCBs. On the PCB 390, one or more hardware (e.g., hardware illustrated by blocks described above with reference to FIG. 2) included in the wearable device 300 may be disposed. The wearable device 300 may include a flexible PCB (FPCB) for interconnecting the hardware.

According to an embodiment, the wearable device 300 may include at least one of a gyro sensor, a gravity sensor, and/or an acceleration sensor for detecting the posture of the wearable device 300 and/or the posture of a body part (e.g., a head) of the user wearing the wearable device 300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 300 may identify the user's motion and/or gesture performed to execute or stop a specific function of the wearable device 300 based on the IMU.

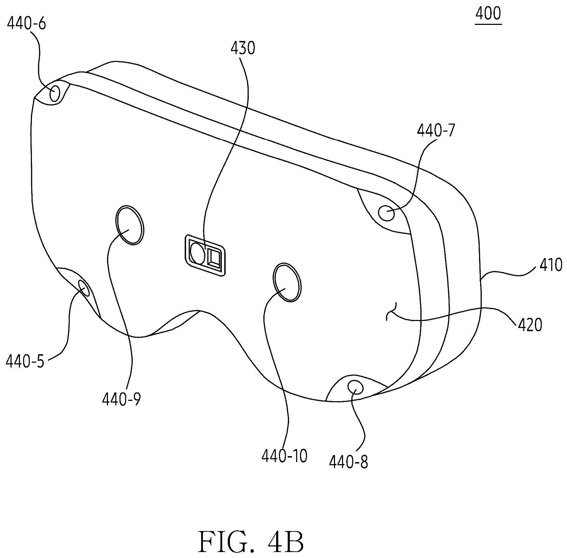

FIGS. 4A to 4B illustrate an example of an exterior of a wearable device 400 according to an embodiment. The wearable device 101 of FIGS. 1 to 2 may include the wearable device 400 of FIGS. 4A to 4B. According to an embodiment, an example of an exterior of a first surface 410 of a housing of the wearable device 400 is shown in FIG. 4A, and an example of an exterior of a second surface 420 opposite to the first surface 410 may be shown in FIG. 4B.

Referring to FIG. 4A, according to an embodiment, the first surface 410 of the wearable device 400 may have an attachable shape on the user's body part (e.g., the user's face). Although not illustrated, the wearable device 400 may further include a strap for being fixed on the user's body part, and/or one or more temples (e.g., the first temple 304 and/or the second temple 305 of FIGS. 3A to 3B). A first display 350-1 for outputting an image to the left eye among the user's two eyes and a second display 350-2 for outputting an image to the right eye among the user's two eyes may be disposed on the first surface 410. The wearable device 400 may further include rubber or silicon packing, which are formed on the first surface 410, for preventing or reducing interference by light (e.g., ambient light) different from the light emitted from the first display 350-1 and the second display 350-2.

According to an embodiment, the wearable device 400 may include cameras 440-1 and 440-2 for photographing and/or tracking two eyes of the user adjacent to each of the first display 350-1 and the second display 350-2. The cameras 440-1 and 440-2 may be referred to as the ET camera. According to an embodiment, the wearable device 400 may include cameras 440-3 and 440-4 for photographing and/or recognizing the user's face. The cameras 440-3 and 440-4 may be referred to as a FT camera.

Referring to FIG. 4B, a camera (e.g., cameras 440-5, 440-6, 440-8, 440-8, 440-9, and 440-10), and/or a sensor (e.g., the depth sensor 430) for obtaining information associated with the external environment of the wearable device 400 may be disposed on the second surface 420 opposite to the first surface 410 of FIG. 4A. For example, the cameras 440-5, 440-6, 440-7, 440-8, 440-9, and 440-10 may be disposed on the second surface 420 in order to recognize an external object distinct from the wearable device 400. For example, by using cameras 440-9 and 440-10, the wearable device 400 may obtain an image and/or video to be transmitted to each of the user's two eyes. The camera 440-9 may be disposed on the second surface 420 of the wearable device 400 to obtain a frame to be displayed through the second display 350-2 corresponding to the right eye among the two eyes. The camera 440-10 may be disposed on the second surface 420 of the wearable device 400 to obtain a frame to be displayed through the first display 350-1 corresponding to the left eye among the two eyes.

According to an embodiment, the wearable device 400 may include the depth sensor 430 disposed on the second surface 420 in order to identify a distance between the wearable device 400 and the external object. By using the depth sensor 430, the wearable device 400 may obtain spatial information (e.g., a depth map) about at least a portion of the FoV of the user wearing the wearable device 400.

Although not illustrated, a microphone for obtaining sound outputted from the external object may be disposed on the second surface 420 of the wearable device 400. The number of microphones may be one or more according to embodiments.

As described above, according to an embodiment, the wearable device 400 may have a form factor for being worn on a head of a user. The wearable device 400 may provide a user experience based on augmented reality and/or mixed reality in a state worn on the head. The wearable device 400 may display an application screen provided from an application executed by the wearable device 400 using the first display 350-1 and the second display 350-2. The wearable device 400 may control displaying the application screen using at least one parameter (e.g., at least one of the parameters included in Table 1) matched to the application screen. The wearable device 400 may change at least one parameter applied to the application screen or may comprehensively apply at least one parameter to a plurality of application screens using an area (e.g., the area 150 of FIG. 1) displayed through the first display 350-1 and the second display 350-2.

Hereinafter, referring to FIG. 5, an example of an operation in which a wearable device (e.g., the wearable device 101 of FIGS. 1 to 2) including the wearable device 300 of FIGS. 3A to 3B and/or the wearable device 400 of FIGS. 4A to 4B displays one or more application screens and an area on at least one display 350 will be described.

FIG. 5 illustrates an example of a flowchart of a wearable device according to an embodiment. The wearable device 101 of FIGS. 1 to 2 may include the wearable device of FIG. 5. An operation of the wearable device described with reference to FIG. 5 may be performed by the wearable device 101 and/or the processor 210 of FIG. 2.

Referring to FIG. 5, in an operation 510, according to an embodiment, the wearable device may display at least one application screen. The wearable device may display at least one application screen on a display (e.g., the display 220 of FIG. 2) based on an application executed by a processor (e.g., the processor 210 of FIG. 2). In case that a plurality of applications are executed, the wearable device may display application screens provided from the plurality of applications on the display. The at least one application screen displayed on the display of the wearable device may have a selected position in a virtual space managed by the wearable device. In case that the position is included in a view angle selected in the virtual space by motion (e.g., a direction of the wearable device tracked by an execution of the motion tracker 273 of FIG. 2) of the wearable device, the wearable device may display the at least one screen.

Referring to FIG. 5, in an operation 520, according to an embodiment, the wearable device may identify an input for connecting at least one application screen with an area associated with one or more parameters. The wearable device may identify the one or more parameters for controlling an application screen and/or playback of audio data corresponding to the application screen based on an execution of the parameter manager 275 of FIG. 2. One or more parameters of the operation 520 may correspond to at least one of the parameters of Table 1. The input for connecting an area of the operation 520 and the at least one screen may be received based on the motion of the user, tracked by an execution of the gesture tracker 272 and/or the gaze tracker 271 of FIG. 2.

Referring to FIG. 5, in an operation 530, according to an embodiment, the wearable device may control playback of an audio signal corresponding to at least one application screen connected to the area using one or more parameters. For example, the wearable device may adjust a volume of the audio signal outputted through a speaker (e.g., the speaker 240 of FIG. 2) of the wearable device based on a parameter associated with the volume. For example, the wearable device may bypass outputting the audio signal using a speaker based on a parameter associated with a do not disturb mode and/or a vibration mode. According to an embodiment, the wearable device may control displaying the application screen based on one or more parameters, together with controlling playback of the audio signal based on the operation 530. For example, the wearable device may change a transparency of the application screen based on a parameter associated with the transparency. For example, the wearable device may change a size of the application screen or replace the application screen with an icon corresponding to the application screen based on a parameter associated with a screen size.

As described above, according to an embodiment, the wearable device may control the display of an application screen and/or playback of an audio signal corresponding to the application screen based on an area displayed on the display. In case that the area is linked with a plurality of application screens, the wearable device may comprehensively control the display of the plurality of application screens and/or playback of audio signals provided from the plurality of application screens based on at least one parameter assigned to the area. The wearable device may provide the user with a user experience of viewing a virtual space wider than a display using motion (e.g., motion of a head) of the user. According to an embodiment, the wearable device may support the user to comprehensively control application screens distributed in the virtual space using the area of the operation 520.

Hereinafter, an example of an operation in which the wearable device identifies an input of the operation 520 according to an embodiment will be described with reference to FIGS. 6A, 6B, 6C, and 6D.

FIGS. 6A, 6B, 6C, and 6D illustrate an example of an operation performed by a wearable device 101 based on an input connecting an area 640 and an application screen according to an embodiment. The wearable device 101 of FIGS. 1 to 2 may include the wearable device 101 of FIGS. 6A, 6B, 6C, and 6D. An operation of the wearable device 101 described with reference to FIGS. 6A, 6B, 6C, and 6D may be performed by the wearable device 101 and/or the processor 210 of FIG. 2.

Referring to FIGS. 6A, 6B, 6C, and 6D, according to an embodiment, different states 601, 602, 603, and 604 in which the area 640 for changing a parameter (e.g., the parameter of FIG. 1) of one or more application screens is generated and/or displayed on a display area 130 of the wearable device 101 are illustrated. The display area 130 may be formed by at least partially overlapping a FoV of a user 110 by a display (e.g., the display 220 of FIG. 2) of the wearable device 101 in a state that the user 110 is wearing the wearable device 101.

In a state 601 of FIG. 6A, according to an embodiment, the wearable device 101 may identify an input for adding an area into the display area 130. The wearable device 101 may track two hands 611 and 612 moved in an external space corresponding to the display area 130 based on an execution of the gesture tracker 272 of FIG. 2. Referring to FIG. 6A, according to an embodiment, the wearable device 101 may identify a right hand 611 of the user 110 which moves from P1 to P2 along a first path 621, and a left hand 612 of the user 110 which moves from P3 to P4 along a second path 622. As a movement of the right hand 611 and a movement of the left hand 612 are simultaneously performed, the wearable device 101 may identify a portion 630 having a rectangular shape in the display area 130. For example, the wearable device 101 may identify an input indicating addition of the area based on a gesture of drawing the portion 630 having a rectangular shape into the display area 130 using a preset number (e.g., two) of hands (e.g., the right hand 611 and/or the left hand 612). According to an embodiment, the wearable device 101 may switch from the state 601 of FIG. 6A to a state 602 of FIG. 6B in response to the gesture drawing the portion 630.

In the state 602 of FIG. 6B, according to an embodiment, the wearable device 101 may display the area 640 on the display area 130. In response to a gesture for segmenting the portion 630 of FIG. 6A, the wearable device 101 may display the area 640 in the portion 630 in the display area 130. The wearable device 101 may display one or more visual objects (e.g., visual objects 641, 642, 643, and 644) for adjusting one or more parameters in the area 640. In the exemplary state 602 of FIG. 6B, the wearable device 101 may display, in the area 640, a visual object 641 for adjusting whether to control the application screen based on the do not disturb mode, a visual object 642 for adjusting a volume of an audio signal corresponding to the application screen, a visual object 643 for adjusting whether to allow background playback of the application screen, and a visual object 644 for adjusting a transparency of the application screen.

In an embodiment, in response to an input for at least one of the visual objects 641, 642, 643, and 644, the wearable device 101 may change at least one parameter matched to the area 640. For example, the wearable device 101 may toggle a parameter associated with the do not disturb mode among parameters corresponding to the area, in response to an input of selecting the visual object 641. For example, the wearable device 101 may display an additional visual object (e.g., slider) for adjusting a volume based on an input of selecting the visual object 642. For example, the wearable device 101 may toggle a parameter for background playback based on an input associated with the visual object 643. For example, the wearable device 101 may display an additional visual object (e.g., slider) to adjust a transparency of the application screen, in response to an input associated with the visual object 644. In the state 602, it is assumed that the parameters assigned to the area 640 have values illustrated in FIG. 6B.

According to an embodiment, the wearable device 101 may identify an input for connecting the area 640 and at least one of application screens 141, 142, and 143, included in the display area 130, in the state 602 of FIG. 6B. The input may be identified based on motion of the user 110 detected using a camera (e.g., the camera 225 of FIG. 2) of the wearable device 101. For example, the wearable device 101 may identify a gesture to move the application screen 141 to the area 640 along a path 651. The gesture may be identified by a gaze of the user 110 wearing the wearable device 101, a movement of a fingertip, and/or a direction of the fingertip. For example, the wearable device 101 may identify motion of a hand, such as a tap-and-hold gesture, that is maintained on the application screen 141 for longer than a preset duration (e.g., several seconds), and then identify the motion of the hand that moves the application screen 141 along the path 651. The wearable device 101 may identify an input connecting the area 640 and the application screen 141 based on a gesture of moving the application screen 141 to the area 640. The wearable device 101 identifying the input in the state 602 may switch to a state 603 of FIG. 6C.

Referring to FIG. 6C, in the state 603, according to an embodiment, the wearable device 101 may display the application screen 141 in the area 640. Since parameters assigned to the area 640 include a transparency set to 20%, the wearable device 101 may display the application screen 141 based on the transparency of 20% in the area 640. The user 110 of the wearable device 101 may perceive a virtual object disposed beyond the application screen 141 or may perceive an external environment overlapping with the application screen 141 based on the transparency of the application screen 141. After moving the application screen 141 into the area 640, the wearable device 101 may display a visual object for displaying one or more parameters assigned to the area 640, such as visual objects 661, 662, 663, and 664. The wearable device 101 may perform the above-described functions with reference to each of the visual objects 641, 642, 643, and 644 of FIG. 6B using the visual objects 661, 662, 663, and 664.

In the state 603 of FIG. 6C, the wearable device 101 may control playback of the application screen 141 and/or an audio signal corresponding to the application screen 141 based on parameters assigned to the area 640. For example, the wearable device 101 may adjust whether to play media content included in the application screen 141 based on a parameter (e.g., the do not disturb mode) associated with the visual object 661. For example, the wearable device 101 may control playback of an audio signal provided from an application (or a process) corresponding to the application screen 141 based on a parameter (e.g., a volume) associated with the visual object 662. For example, the wearable device 101 may control an execution of the application screen 141 based on a type in which the application screen 141 is displayed, based on a parameter (e.g., whether to playback background) associated with the visual object 663.

In an embodiment, the area 640 may be connected to a plurality of application screens. In the state 603 of FIG. 6C, the wearable device 101 may identify a gesture for moving the application screen 143 into the area 640 along a path 652. The wearable device 101 may switch from the state 603 of FIG. 6C to a state 604 of FIG. 6D, in response to identifying the gesture. In the state 604 of FIG. 6D, according to an embodiment, the wearable device 101 may display the application screens 141 and 143 in the area 640. The wearable device 101 may adjust positions and/or sizes of the application screens 141 and 143 based on a shape and/or a size of the area 640.

Referring to FIG. 6D, in the state 604 in which a plurality of application screens 141 and 143 are connected to the area 640, the wearable device 101 may control all of the application screens 141 and 143 based on parameters assigned to the area 640. For example, the wearable device 101 may play audio signals corresponding to each of the application screens 141 and 143 based on a volume of a maximum value. For example, the wearable device 101 may display the application screens 141 and 143 with 20% transparency. An operation of displaying the application screens 141 and 143 may be performed similarly to the state 603 of FIG. 6C, based on whether background playback is enabled and/or the do not disturb mode.

As described above, according to an embodiment, the wearable device 101 may control one or more application screens using the area 640. For example, in the state 604 of FIG. 6D, the wearable device 101 may comprehensively control the application screens 141 and 143 included in the area 640 based on at least one parameter assigned to the area 640. Independently of controlling the application screens 141 and 143, the wearable device 101 may control the application screen 142 using a parameter different from the at least one parameter assigned to the area 640. For example, volume of an audio signal corresponding to the application screen 142 may be different from volume of an audio signal corresponding to at least one of the application screens 141 and 143.

According to an embodiment, the area 640 generated in the display area 130 by the wearable device 101 may be generated independently of a gesture described with reference to FIG. 6A. Hereinafter, in reference to FIGS. 7A, 7B, 7C, and 7D, an example of an operation in which the wearable device 101 according to an embodiment generates the area 640 based on a gesture different from the gesture of FIG. 6A will be described.

FIGS. 7A, 7B, 7C, and 7D illustrate an example of an operation of changing a parameter applied to application screens included in an area 710 by a wearable device 101 according to an embodiment. The wearable device 101 of FIGS. 1 to 2 may include the wearable device 101 of FIGS. 7A, 7B, 7C, and 7D. An operation of the wearable device 101 described with reference to FIGS. 7A, 7B, 7C, and 7D may be performed by the wearable device 101 and/or the processor 210 of FIG. 2.

Referring to states 701, 702, and 703 of FIGS. 7A, 7B, 7C, and 7D, according to an embodiment, the wearable device 101 may display a plurality of application screens 141, 142, and 143. In a state 701 in which the plurality of application screens 141, 142 and 143 are displayed, the wearable device 101 may identify an input for grouping the plurality of application screens. For example, the wearable device 101 may identify a gesture for moving all of application screens 171 and 172 into the area 710 along each of paths 721 and 722. The wearable device 101 may switch, in response to the input, from the state 701 of FIG. 7A to a state 702 of FIG. 7B.

Referring to FIG. 7B, in the state 702, according to an embodiment, the wearable device 101 may recommend at least one parameter to be commonly applied to application screens (e.g., the application screens 141 and 142 of FIG. 7A) connected to the area 710. For example, in the state 702 in which the application screen 141 provided by a video streaming application and the application screen 142 provided by a game application are connected to the area 710, the wearable device 101 may recommend a parameter suitable for video content played through the application screen 141 and game content provided through the application screen 142, using a portion 711 of the area 710. For example, the wearable device 101 may display parameters for allowing background playback of all of the video content and the game content, and allowing output an audio signal on a portion 711 of the area 710. In the area 710, on another portion 712 distinguished from the portion 711, the wearable device 101 may display a different parameter (e.g., a transparency, and whether a screen is fixed) distinguished from the parameter included in the portion 711. According to an embodiment, the wearable device 101 may comprehensively control the application screens 141 and 142 based on at least one parameter inputted through the area 710 in the state 702.

Referring to FIG. 7C, in a state 703 after the state 702, the wearable device 101 may control the application screens 141 and 142 based on one or more parameters assigned to the area 710. The wearable device 101 may display the application screens 141 and 142 in the area 710. In the state 703, the wearable device 101 may identify a direction (G) of a gaze of a user 110. The direction (G) may be tracked by the wearable device 101 based on an execution of the gaze tracker 271 of FIG. 2. In the state 703, in response to identifying the direction (G) of a gaze facing a point P1 in the area 710, the wearable device 101 may identify at least one parameter commonly applied to the application screens 141 and 142 included in the area 710. For example, the wearable device 101 may display a visual object 730 for adjusting a volume among parameters corresponding to the application screens 141 and 142 based on the direction (G) of a gaze of the user gazing at the point P1 in the area 710 longer than a preset duration. Although the visual object 730 having a shape of a slider is illustrated as an example, an embodiment is not limited thereto. According to an embodiment, the wearable device 101 may change volumes of audio signals corresponding to the application screens 141 and 142 in response to an input associated with the visual object 730. An embodiment is not limited thereto, and the wearable device 101 may display a visual object, such as the visual object 740, including at least one notification message generated by applications corresponding to the application screens 141 and 142.

Although an operation of the wearable device 101 based on an input based on the paths 721 and 722 of FIG. 7A has been described, an embodiment is not limited thereto. Referring to a state 704 of FIG. 7D, according to an embodiment, the wearable device 101 may identify a gesture for grouping the application screens 141 and 142 by tracking a point (P) of a fingertip of a hand (e.g., the left hand 612). Referring to FIG. 7D, the wearable device 101 may identify an input for grouping the application screens 141 and 142, based on the point (P) moved along a path 750 having a shape surrounding the application screens 141 and 142. The wearable device 101 may display, in response to the input, the area 710 in which one or more parameters to be commonly applied to the application screens 141 and 142 is displayed. Similar to the area 710 of FIG. 7B, the area 710 of FIG. 7D may include a portion 711 for recommending at least one parameter to be commonly applied to the application screens 141 and 142.

As described above, according to an embodiment, the wearable device 101 may recommend a parameter corresponding to at least one application screen based on an input connecting the at least one application screen and the area 710. According to an embodiment, the wearable device 101 may display a visual object 730 for adjusting a parameter commonly applied to the plurality of application screens in the state 703 in which the area 710 and the plurality of application screens are connected. The visual object 730 may be referred to as a representative controller for the plurality of application screens.

Hereinafter, an example of an operation of the wearable device 101 described above with reference to FIGS. 7A, 7B, 7C, and 7D will be described with reference to FIGS. 8A to 8B.

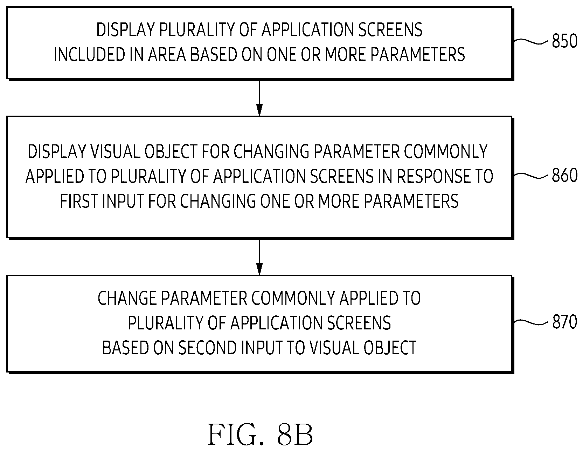

FIGS. 8A to 8B illustrate an example of a flowchart of a wearable device according to an embodiment. The wearable device 101 of FIGS. 1 to 2 may include the wearable device of FIGS. 8A to 8B. An operation of the wearable device described with reference to FIGS. 8A to 8B may be performed by the wearable device 101 and/or the processor 210 of FIG. 2. An operation of the wearable device described with reference to FIG. 8A and an operation of the wearable device described with reference to FIG. 8B may be performed substantially simultaneously and/or independently.

Referring to FIG. 8A, in an operation 810, according to an embodiment, the wearable device may identify a first input for connecting at least one application screen to an area (e.g., the area 710 of FIGS. 7A, 7B, 7C, and 7D) associated with one or more parameters. The first input may be identified based on a gesture for moving at least one application screen into the area, such as gestures for paths 721 and 722 of FIG. 7A. The first input may be identified by a gesture for grouping at least one application screen, such as a gesture for the path 750 of FIG. 7D. The wearable device may perform the operation 810 based on an execution of the gaze tracker 271 and/or the gesture tracker 272 of FIG. 2.

Referring to FIG. 8A, in an operation 820, according to an embodiment, the wearable device may move at least one application screen into the area. The wearable device may move at least one application screen selected by the first input into the area, in response to the first input of the operation 810. In case that a plurality of application screens are included in the area, the wearable device may arrange a size and/or a position of the plurality of application screens in the area, based on the operation 820. For example, the wearable device may reduce the plurality of application screens so that a sum of sizes of the plurality of application screens does not exceed a size of the area. Reducing the plurality of application screens by the wearable device may include an operation of maintaining aspect ratios of each of the plurality of application screens. For example, the wearable device may arrange peripheries (e.g., top) of the plurality of application screens based on a line included in the area.

Referring to FIG. 8A, in an operation 830, according to an embodiment, the wearable device may display a visual object guiding a change of one or more parameters based on at least one application screen. The wearable device may display the visual object for guiding the change in one or more parameters included in the area based on the at least one application screen moved into the area. For example, the wearable device may recommend changing the one or more parameters based on at least one application screen connected to the area, such as the portion 711 and/or a visual object included in the portion 711 of FIG. 7B.

Referring to FIG. 8A, in an operation 840, according to an embodiment, the wearable device may change one or more parameters based on a second input associated with the visual object. For example, the second input may be received through a visual object included in the area 710 of FIG. 7B. The wearable device may control at least one application screen included in the area based on the one or more parameters changed based on the second input. For example, the wearable device may control background playback and/or a transparency of at least one application screen included in the area. For example, the wearable device may adjust volume of an audio signal corresponding to the at least one application screen and/or whether a vibration signal corresponding to the audio signal is outputted.

Referring to FIG. 8B, in an operation 850, according to an embodiment, the wearable device may display a plurality of application screens included in an area based on one or more parameters. In an embodiment, the operation 850 of FIG. 8B may be performed after the operation 840 of FIG. 8A.

Referring to FIG. 8B, in an operation 860, according to an embodiment, the wearable device may display a visual object for changing a parameter commonly applied to a plurality of application screens in response to a first input for changing one or more parameters. The first input of the operation 860 may be identified by a direction (G) of a gaze gazing at the point P1 of FIG. 7C. The wearable device may identify at least one parameter commonly applied to application screens included in the area in response to the first input of the operation 860. The wearable device may display a visual object for adjusting the identified at least one parameter, such as the visual object 730 of FIG. 7C.

Referring to FIG. 8B, in an operation 870, according to an embodiment, the wearable device may change a parameter commonly applied to a plurality of application screens based on a second input to the visual object. For example, the wearable device may change a parameter commonly applied to the plurality of application screens included in the area based on an input associated with the visual object 730 of FIG. 7C.

Hereinafter, an exemplary operation of a wearable device for recommending grouping of the plurality of application screens including a specific application screen to a user focused on the specific application screen will be described with reference to FIGS. 9A, 9B, and 9C.

FIGS. 9A, 9B, and 9C illustrate an example of an operation in which a wearable device 101 generates an area for a plurality of application screens according to an embodiment. The wearable device 101 of FIGS. 1 to 2 may include the wearable device 101 of FIGS. 9A, 9B, and 9C. An operation of the wearable device 101 described with reference to FIGS. 9A, 9B, and 9C may be performed by the wearable device 101 and/or the processor 210 of FIG. 2.

Referring to states 901, 902, and 903 of FIGS. 9A, 9B, and 9C, according to an embodiment, the wearable device 101 may display a plurality of application screens 141, 142 and 143 on a display area 130. The wearable device 101 may identify a direction (G) of a gaze of a user 110 wearing the wearable device 101 based on an execution of the gaze tracker 271 of FIG. 2. Referring to FIG. 9A, an exemplary state 901 in which the direction (G) of the gaze faces a point P2 in the application screen 141 is illustrated. In the state 901, the wearable device 101 may display an area 910 for adjusting at least one parameter applied to the application screen 141 based on identifying the direction (G) of the gaze gazing at the point P2 longer than a preset duration (e.g., several seconds). Referring to FIG. 9A, the wearable device 101 may display visual objects 911, 912, and 913 in the area 910 to control parameters associated with a volume, whether background playback is enabled, and/or a screen size. An embodiment is not limited thereto, and the wearable device 101 may display at least one of the parameters included in Table 1, or a visual object for controlling at least one of the parameters, in the area 910.

In the state 901 of FIG. 9A, the wearable device 101 may display, in the area 910, visual objects 914 and 915 having a shape of a button for checking whether to control the application screen 141 based on the area 910. The wearable device 101 may cease displaying the area 910 based on an input indicating selection of the visual object 914. The wearable device 101 may execute a function associated with the application screen 141 using at least one parameter set by the area 910 in response to an input indicating selection of the visual object 915. For example, the wearable device 101 may change a size of the application screen 141 based on a screen size set by the area 910. For example, the wearable device 101 may change volume of an audio signal corresponding to the application screen 141 based on a volume set by the area 910. For example, in case that background playback is allowed by a parameter set by area 910, the wearable device 101 may play media content included in the application screen 141 independently of whether application screen 141 is included in the display area 130.

Referring to FIG. 9B, the state 902 after the wearable device 101 controls the application screen 141 is illustrated based on an input for the visual object 915 displayed in the state 901. The wearable device 101 receiving an input for setting a size of the application screen 141 to a minimum based on the visual object 913 in the area 910 may replace the application screen 141 with an icon 921 in the state 902. The wearable device 101 may identify the icon 921 representing the application screen 141 based on an execution of the application corresponding to the application screen 141. In the state 902 of displaying the icon 921, the wearable device 101 may cease displaying the application screen 141 corresponding to the icon 921.

In the state 902 of FIG. 9B, according to an embodiment, the wearable device 101 may recommend applying at least one parameter applied to the application screen 141 to another application screen linked with the application screen 141. For example, in the state 902 in which the application screen 141 provided from a video streaming application is replaced with the icon 921, the wearable device 101 may identify the application screen 143 provided from a music streaming application similar to the video streaming application on the display area 130. The wearable device 101 may display a visual object 940 for controlling the application screen 143 corresponding to the music streaming application, based on at least one parameter applied to the application screen 141. The wearable device 101 may display the visual object 930 for emphasizing the application screen 143, together with the visual object 940.

Referring to FIG. 9B, the wearable device 101 may display the visual object 930 having a shape surrounding the application screen 143. The wearable device 101 may display the visual object 940 for checking whether at least one parameter applied to the application screen 141 is to be applied to the application screen 143, wherein the visual object 940 may be in a form of a popup window. The wearable device 101 may display, on the visual object 940, text (e.g., " Manage both apps at once?") for guiding applying the at least one parameter to the application screen 143. The wearable device 101 may display, on the visual object 940, visual objects 942 and 944 having a form of a button for receiving an input associated with the at least one parameter. The wearable device 101 may cease displaying the visual object 940 in response to a gesture of selecting the visual object 944. The wearable device 101 may refrain from applying the at least one parameter to the application screen 143, based on a gesture indicating selection of the visual object 944.

According to an embodiment, the wearable device 101 may apply at least one parameter applied to the application screen 141 to the application screen 143 based on a gesture of selecting the visual object 942. The wearable device 101 may switch from the state 902 of FIG. 9B to a state 903 of FIG. 9C based on an input indicating selection of the visual object 942. The wearable device 101 may replace the application screen 143 with an icon 922 in the state 903. The icon 922 may be provided from an application corresponding to the application screen 143. According to an embodiment, the wearable device 101 may comprehensively control all of the application screens 141 and 143 using at least one parameter assigned to the area 910 in response to an input associated with the visual object 942. The wearable device 101 may display icons 921 and 922, corresponding to each of the application screens 141 and 143, in a visual object 920 to represent that they are comprehensively controlled by the at least one parameter in the state 903. The visual object 920, similar to the area 910, may be displayed in the display area 130 to represent one or more application screens controlled by the same parameter.

Hereinafter, referring to FIG. 10, an example of an operation of the wearable device 101 described above with reference to FIGS. 9A, 9B, and 9C will be described.

FIG. 10 illustrates an example of a flowchart of a wearable device according to an embodiment. The wearable device 101 of FIGS. 1 to 2 may include the wearable device of FIG. 10. The operation of the wearable device described with reference to FIG. 10 may be performed by the wearable device 101 and/or the processor 210 of FIG. 2.

Referring to FIG. 10, in an operation 1010, according to an embodiment, the wearable device may identify a first input for selecting a first application screen. The first input may be identified by tracking motion of a user tracked by the wearable device, or may be identified by an external electronic device (e.g., a remote controller for the wearable device) connected to the wearable device. For example, the wearable device may identify the first input based on a direction of a gaze of the user (e.g., the user 110 of FIG. 9A) wearing the wearable device described above with reference to FIG. 9A.

Referring to FIG. 10, in an operation 1020, according to an embodiment, the wearable device may display a visual object guiding to control a second application screen in common based on a type of the first application screen among a plurality of application screens. A visual object of the operation 1020 may include at least one of visual objects 930 and 940 of FIG. 9B. The wearable device may identify a type of media content outputted through the first application screen and/or a type of a first application providing the first application screen. The wearable device may identify the second application screen displaying media content of a type similar to the type of the media content among a plurality of application screens displayed through a display. The wearable device may display the visual object for generating an area connected to both the second application screen and the first application screen based on identifying the second application screen.

Referring to FIG. 10, in an operation 1030, according to an embodiment, the wearable device may identify a second input for grouping the first application screen and the second application screen. Before identifying the second input (1030 - NO), the wearable device may maintain displaying the visual object of the operation 1020. The second input may include a gesture for selecting the visual object of the operation 1020.

In a state in which the second input of the operation 1030 is identified (1030-YES), according to an embodiment, the wearable device may generate an area for controlling both the first application screen and the second application screen, and may move the first application screen and the second application screen to the area by performing an operation 1040. The area of the operation 1040 may include an area represented by the visual object 920 of FIG. 9C. The wearable device may apply at least one parameter in common to both the first application screen and the second application screen using the area based on the operation 1040.

As described above, according to an embodiment, the wearable device may control at least one application screen displayed through the display using an area formed in a portion of the display. An operation of controlling the at least one application screen using the area by the wearable device may include an operation of adjusting a size, a position, and/or a transparency of the at least one application screen using at least one parameter corresponding to the area. The operation of controlling the at least one application screen using the area by the wearable device may include an operation of determining volume of an audio signal corresponding to the at least one application screen and/or whether to output the audio signal using the at least one parameter. In case that the number of application screens connected to the area increases, the wearable device may comprehensively control a plurality of application screens connected to the area using at least one parameter set by the area.

In an embodiment, the wearable device may form an area based on an external space adjacent to the wearable device. According to an embodiment, the wearable device may not only display a floating area 150 on the display of FIG. 1, but also display an area associated with the external object adjacent to the wearable device. Hereinafter, referring to FIGS. 11A to 11B, according to an embodiment, an example of an operation of forming and displaying an area associated with an external object by a wearable device will be described.

FIGS. 11A to 11B illustrate an example of an operation in which a wearable device 101 generates an area based on an external space and/or a position of a user 110 according to an embodiment. The wearable device 101 of FIGS. 1 to 2 may include the wearable device 101 of FIGS. 11A to 11B. An operation of the wearable device 101 described with reference to FIGS. 11A to 11B may be performed by the wearable device 101 and/or the processor 210 of FIG. 2.

According to an embodiment, the wearable device 101 may identify at least one external object. The wearable device 101 may identify at least one external object visible through a display using a camera (e.g., the camera 225 of FIG. 2). In an exemplary state 1101 of FIG. 11A, the wearable device 101 may identify an external object including a desk 1110, a switch 1130, a door 1140, and/or a watch 1150. According to an embodiment, the wearable device 101 may identify an input for generating an area 1120 associated with the external object visible through the display. For example, the wearable device 101 may identify a point of a preset body part that moves along a path 1112 in a portion of a display area 130 where a surface of the desk 1110 is visible. Referring to FIG. 11A, the wearable device 101 may identify the path 1112 having a rectangular shape by tracking a point (P) of a fingertip of a right hand 611.

According to an embodiment, the wearable device 101 may generate the area 1120 having a shape of the path 1112 in response to identifying the path 1112 of the moved body part (e.g., the right hand 611) in a portion of the display area 130 in which the desk 1110 is visible. Similar to the area 150 of FIG. 1, the area 1120 be matched with at least one parameter for controlling at least one application screen. The wearable device 101 may use the at least one parameter to control the at least one application screen based on an input connecting the at least one application screen and the area 1120.

In an embodiment, in response to an input for adding the area 1120 based on the path 1112, the wearable device 101 may change at least one parameter associated with the area 1120 based on an external object overlapping the path 1112. For example, based on identifying the path 1112 overlapping the desk 1110, the wearable device 101 may change at least one parameter (e.g., at least one of the parameters in Table 1) assigned to the area 1120 based on a characteristic of the desk 1110. For example, the wearable device 101 may minimize a volume, or may activate do not disturb mode among a parameter assigned to the area 1120, based on an activity (e.g., work) performed by the user 110 on the desk 1110. In an exemplary case in which the area 1120 is formed on the desk 1110, the wearable device 101 may display the area 1120 associated with a position of the desk 1110. For example, in the display area 130, the area 1120 may be coupled on a surface of the desk 1110.

According to an embodiment, the wearable device 101 may provide feedback for an input associated with the area 1120 based on a type and/or a feature of an external object (e.g., the desk 1110) in which the area 1120 is formed. For example, the wearable device 101 may control a haptic actuator based on an input connecting the area 1120 and an application screen. The wearable device 101 may output haptic feedback to the user 110 wearing the wearable device 101 based on the control of the haptic actuator. The wearable device 101 may output the haptic feedback representing vibration of the desk 1110 to the user 110.

Similar to the operation of adding the area 1120 based on the path 1112 overlapping the desk 1110, the wearable device 101 may add an area associated with an external object different from the desk 1110. For example, in response to an input for adding an area associated with the switch 1130, the wearable device 101 may match the switch 1130 and at least one parameter. In a state in which the switch 1130 and at least one parameter are matched, the wearable device 101 may identify a state of the switch 1130 corresponding to the area using a camera. For example, the wearable device 101 may use the camera to track whether the state (or a shape) of the switch 1130 is switched. The wearable device 101 may select at least one parameter adjusted by the state of the switch 1130 based on a function of the switch 1130. For example, in case that the switch 1130 to control lighting is identified, the wearable device 101 may couple a parameter associated with brightness among parameters assigned to the area with the switch 1130. In the example, the wearable device 101 may change brightness of the application screen connected to the area based on the state (e.g., a power-on state) of the switch 1130. In case that a plurality of application screens are connected to the area, the wearable device 101 may comprehensively change the brightness of the plurality of application screens based on the state of the switch 1130.

For example, in response to an input for adding an area associated with the watch 1150, the wearable device 101 may match the watch 1150 and at least one parameter assigned to the area. For example, the wearable device 101 may change at least one of the parameters assigned to the area based on time displayed by the watch 1150. For example, in case that the time displayed on the clock 1150 is included in a preset time interval (e.g., night time) indicated by the parameter, the wearable device 101 may change an application screen connected to the area to the do not disturb mode.

For example, based on an input for adding an area associated with the door 1140, the wearable device 101 may identify an external space separated by the door 1140. The wearable device 101 may change at least one parameter applied to at least one application screen connected to the area based on a position of the wearable device 101 for the external space in a state of adding the area associated with the door 1140. For example, in case of entering the external space separated by the door 1140, the wearable device 101 may change volume of an audio signal corresponding to the at least one application screen to volume set by the area. For example, in case of entering the outside of the external space, the wearable device 101 may change a transparency of the at least one application screen to another transparency that is distinct from a transparency set by the area.

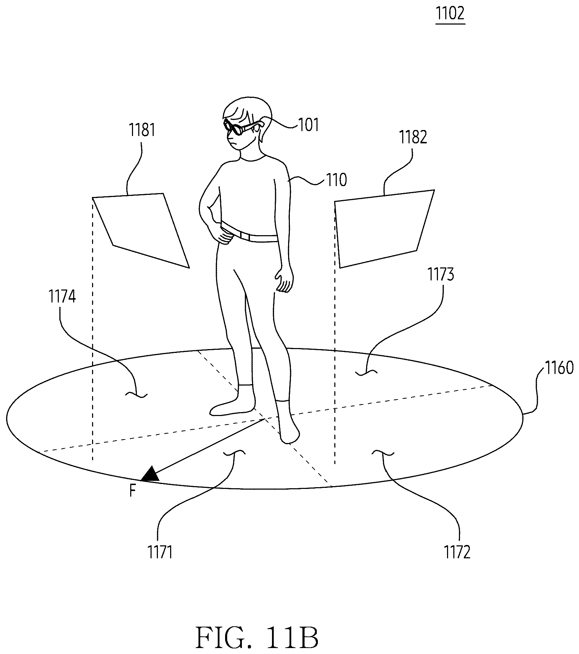

Referring to FIG. 11B, according to an embodiment, the wearable device 101 may distinguish an external space 1160 including the wearable device 101 into a first external space 1171 to a fourth external space 1174, based on a direction (F) of the user 110 wearing the wearable device 101. The direction (F) may correspond to a front of the user 110. For example, the direction (F) may correspond to a direction of a head of the user 110 wearing the wearable device 101. For example, the first external space 1171 may include the direction (F) of the user 110 and may be formed based on an angle range of 90 °. A second external space 1172 may be formed based on an angle range of 90 ° to the left with respect to the direction (F) of the user 110. A third external space 1173 may be formed based on an angle range of 90 ° in a direction opposite to the direction (F) of the user 110. The fourth external space 1174 may be formed based on an angle range of 90 ° to the right with respect to the direction (F) of the user 110.

According to an embodiment, the wearable device 101 may identify an input for adding an area at a position associated with the direction (F) of the user 110. For example, the wearable device 101 may receive an input for adding an area 1181 into the first external space 1171. For example, the wearable device 101 may move application screens to the first external space 1171, and then identify a gesture surrounding the application screens. The wearable device 101 may generate a first area 1181 connected to the application screens based on the gesture. The wearable device 101 may place the first area 1181 in the first external space 1171 including the direction (F) of the user 110 independently of movement of the user 110. The wearable device 101 may control application screens connected to the first area 1181 using at least one parameter assigned to the first area 1181.

According to an embodiment, the wearable device 101 may change a parameter to be applied to at least one application screen associated with the area based on a positional relationship between the area and the user 110 wearing the wearable device 101. For example, the wearable device 101 identifying an input for adding a second area 1182 into the second external space 1172 formed on the left of the user 110 may set at least one parameter associated with the second area 1182 so that an application screen corresponding to the second area 1182 is executed in a silent mode. Similarly, the wearable device 101 may change at least one parameter assigned to the area based on the external space including the area, among the first external space 1171 to the fourth external space 1174 distinguished based on the direction (F) of the user 110.

As described above, according to an embodiment, the wearable device 101 may execute a function for applying at least one parameter to one or more application screens floating in a FoV of the user 110 wearing the wearable device 101. The function may include a function of generating an area connectable to the one or more application screens on a display of the wearable device 101. The wearable device 101 may apply at least one parameter (e.g., at least one of the parameters in Table 1) assigned to the area to one or more application screens in response to an input connecting the area and the one or more application screens. For example, in case that a plurality of application screens are connected to the area, the wearable device 101 may change a transparency and/or a size of the plurality application screens based on the at least one parameter. In the example, the wearable device 101 may change volume of audio signals provided from the plurality of application screens based on the at least one parameter. The wearable device 101 may comprehensively change a parameter for displaying the plurality of application screens using the area.

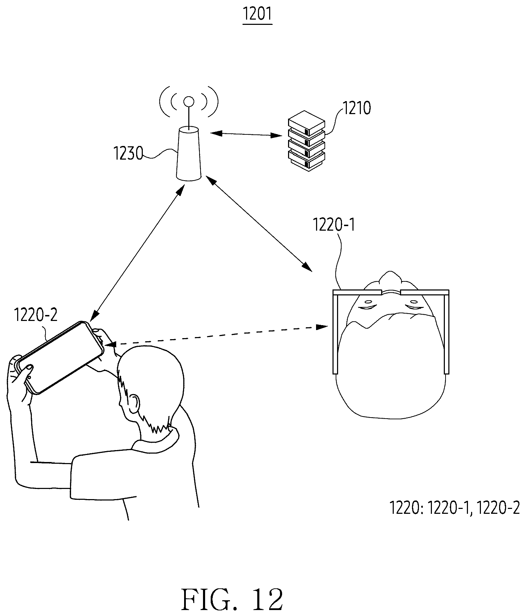

An operation of the wearable device described above with reference to FIGS. 1 to 10, and FIGS. 11A to 11B may be associated with a metaverse service provided through a network. Hereinafter, an example of a metaverse service provided to a user based on a wearable device according to an embodiment will be described with reference to FIG. 12.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

FIG. 12 is an exemplary diagram of a network environment 1201 in which a metaverse service is provided through a server 1210.

Referring to FIG. 12, a network environment 1201 may include a server 1210, a user terminal 1220 (e.g., a first terminal 1220-1 and a second terminal 1220-2), and a network connecting the server 1210 and the user terminal 1220. In the network environment 1201, the server 1210 may provide a metaverse service to the user terminal 1220. The network may be formed by at least one intermediate node 1230 including an access point (AP) and/or a base station. The user terminal 1220 may access the server 1210 through the network and output a user interface (UI) associated with a metaverse service to a user of the user terminal 1220. Based on the UI, the user terminal 1220 may obtain information to be inputted into the metaverse service from the user, or output information (e.g., multimedia content) associated with the metaverse service to the user.

In this case, the server 1210 provides a virtual space so that the user terminal 1220 may perform activities in the virtual space. In addition, the user terminal 1220 may represent information provided by the server 1210 to the user by installing an S/W agent to access the virtual space provided by the server 1210, or transmit information that the user wants to represent in the virtual space to the server. The S/W agent may be provided directly through the server 1210, downloaded from a public server, or embedded and provided when purchasing a terminal.

In an embodiment, the metaverse service may provide a service to the user terminal 1220 and/or a user by using the server 1210. The embodiment is not limited thereto, and the metaverse service may be provided through individual contacts between users. For example, in the network environment 1201, the metaverse service may be provided by a direct connection between the first terminal 1220-1 and the second terminal 1220-2, independently of the server 1210. Referring to FIG. 12, in the network environment 1201, the first terminal 1220-1 and the second terminal 1220-2 may be connected to each other through a network formed by at least one intermediate node 1230. In an embodiment in which the first terminal 1220-1 and the second terminal 1220-2 are directly connected, any one of the first terminal 1220-1 and the second terminal 1220-2 may perform a role of the server 1210. For example, a metaverse environment may be configured only with a device-to-device connection (e.g., a peer-to-peer (P2P) connection).

In an embodiment, the user terminal 1220 (or the user terminal 1220 including the first terminal 1220-1 and the second terminal 1220-2) may be made in various form factors, and it is characterized by including an output device for providing an image and/or sound to the user and an input device for inputting information into the metaverse service. An exemplary user terminal 1220 in various form factors may include a smartphone (e.g., the second terminal 1220-2), an AR device (e.g., the first terminal 1220-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1230) includes all of various broadband networks including 3G, 4G, and 5G and short-range networks (e.g., a wired network or a wireless network that directly connects the first terminal 1220-1 and the second terminal 1220-2) including Wi-Fi and BT.

In an embodiment, the user terminal 1220 of FIG. 12 may include the wearable device 101 of FIGS. 1 to 10, and FIGS. 11A to 11B.

In an embodiment, a method of comprehensively controlling a plurality of application screens displayed on a display of a wearable device and/or audio signals of the plurality of application screens may be required. As described above, according to an embodiment, a wearable device (e.g., the wearable device 101 of FIGS. 1 to 2) may comprise a speaker (e.g., the speaker 240 of FIG. 2), memory (e.g., the memory 215 of FIG. 2) storing instructions, a display (e.g., display 220 of FIG. 2), and a processor (e.g., the processor 210 of FIG. 2). The instructions, when executed by the processor, may be configured to cause the wearable device to display, in the display, an area (e.g., the area 150 of FIG. 1) in which an application screen and one or more parameters to control the speaker are included. The instructions, when executed by the processor, may be configured to cause the wearable device to identify an input to connect the application screen and the area. The instructions, when executed by the processor, may be configured to cause the wearable device to, in response to audio data corresponding to the application screen after identifying the input, output, through the speaker, an audio signal having a volume included in the one or more parameters.

For example, the instructions, when executed by the processor, may be configured to cause the wearable device to, in response to the input, display the application screen in the area.

For example, the instructions, when executed by the processor, may be configured to cause the wearable device to, in a state displaying the application screen which is a first application screen in the area, display a visual object (e.g., the visual object 940 of FIG. 9B) to connect a second application screen to the area. The instructions, when executed by the processor, may be configured to cause the wearable device to, in response to another input associated with the visual object, move the second application screen to the area.

For example, the instructions, when executed by the processor, may be configured to cause the wearable device to, in response to another input to connect another application screen distinguished from the application screen to the area, display the application screen and the another application screen in the area. The instructions, when executed by the processor, may be configured to cause the wearable device to, in response to other audio data corresponding to the another application screen, output, together with the audio signal through the speaker, another audio signal having the volume.

For example, the instructions, when executed by the processor, may be configured to cause the wearable device to display the application screen included in the area based on a transparency included in the one or more parameters.

For example, the instructions, when executed by the processor, may be configured to cause the wearable device to, in response to another input gazing at the area longer than a preset duration, display a visual object to adjust the volume in the area. The instructions, when executed by the processor, may be configured to cause the wearable device to, in response to another input associated with the visual object, change the volume of the audio signal.

For example, the instructions, when executed by the processor, may be configured to cause the wearable device to identify a state of an external object corresponding to the area using the camera. The instructions, when executed by the processor, may be configured to cause the wearable device to, based on the state of the external object, change the one or more parameters.

For example, the instructions, when executed by the processor, may be configured to cause the wearable device to, based on motion of a body part including a hand by using the camera, identify another input to form the area.

As described above, according to an embodiment, a method of a wearable device may comprise displaying, in a display of the wearable device, an area in which an application screen and one or more parameters to control a speaker of the wearable device are included. The method may comprise identifying an input to connect the application screen and the area. The method may comprise, in response to audio data corresponding to the application screen after identifying the input, outputting, through the speaker, an audio signal having a volume included in the one or more parameters.

For example, the identifying may comprise, in response to the input, displaying the application screen in the area.

For example, the method may comprise, in a state displaying the application screen which is a first application screen in the area, displaying a visual object to connect a second application screen to the area. The method may comprise, in response to another input associated with the visual object, moving the second application screen to the area.

For example, the method may comprise, in response to another input to connect another application screen distinguished from the application screen to the area, displaying the application screen and the another application screen in the area. The method may comprise, in response to other audio data corresponding to the another application screen, outputting, together with the audio signal through the speaker, another audio signal having the volume.

For example, the identifying may comprise, in response to the input, displaying the application screen in the area based on a transparency included in the one or more parameters.

For example, the method may comprise, in response to another input gazing at the area longer than a preset duration, displaying a visual object to adjust the volume in the area. The method may comprise, in response to another input associated with the visual object, changing the volume of the audio signal.

For example, the method may comprise identifying a state of an external object corresponding to the area using the camera. The method may comprise, based on the state of the external object, changing the one or more parameters.

For example, the method may comprise, based on motion of a body part including a hand that is detected by using the camera, identifying another input to form the area.

As described above, according to an embodiment, a method of a wearable device may comprise, in a state of displaying a plurality of application screens on a display of the wearable device, identifying an input for grouping the plurality of application screens. The method may comprise, in response to the input, displaying the plurality of application screens in an area to which one or more parameters are assigned. The method may comprise controlling playback of audio signals provided in each of the plurality of application screens based on the one or more parameters.

For example, the controlling may comprise controlling a haptic actuator based on the audio signals, based on the one or more parameters indicating selection of a preset mode associated with the haptic actuator among a speaker and the haptic actuator of the wearable device.

For example, the controlling may comprise outputting, through the speaker of the wearable device, the audio signals having a volume included in the one or more parameters.

For example, the displaying may comprise displaying the plurality of application screens based on a transparency included in the one or more parameters.

For example, the identifying may include identifying the input based on motion of a user wearing the wearable device detected using a camera of the wearable device.

As described above, according to an embodiment, a wearable device (e.g., the wearable device 101 of FIGS. 1 to 2) may comprise a camera (e.g., the camera 225 of FIG. 2), a display (e.g., the display 220 of FIG. 2), memory (e.g., the memory 215 of FIG. 2) storing instructions, a speaker (e.g., the speaker 240 of FIG. 2), and a processor (e.g., the processor 210 of FIG. 2). The instructions, when executed by the processor, may be configured to cause the wearable device to, in a state of displaying a plurality of application screens on the display, identify an input for grouping the plurality of application screens (e.g., the application screens 141 and 142 of FIGS. 7A, 7B, and 7C). The instructions, when executed by the processor, may be configured to cause the wearable device to, in response to the input, display the plurality of application screens in an area (e.g., the area 710 of FIGS. 7A, 7B, and 7C) to which the one or more parameters are assigned. The instructions, when executed by the processor, may be configured to cause the wearable device to control playback of audio signals provided from each of the plurality of application screens based on the one or more parameters.

For example, the instructions, when executed by the processor, may be configured to cause the wearable device to control a haptic actuator based on the audio signals, based on the one or more parameters indicating selection of a preset mode associated with the haptic actuator among the speaker and the haptic actuator.

For example, the instructions, when executed by the processor, may be configured to cause the wearable device to output, through the speaker, the audio signals having a volume included in the one or more parameters.

For example, the instructions, when executed by the processor, may be configured to cause the wearable device to display the plurality of application screens based on a transparency included in the one or more parameters.

For example, the instructions, when executed by the processor, may be configured to cause the wearable device to, based on motion of a user wearing the wearable device that is detected by using the camera, identify the input.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
a speaker;
a display;
memory storing instructions; and
a processor, wherein the instructions, when executed by the processor, are configured to cause the wearable device to:
display, in the display, an application screen and an area in which one or more parameters to control the speaker are included;
identify an input to connect the application screen and the area; and
in response to audio data corresponding to the application screen after identifying the input, output, through the speaker, an audio signal having a volume included in the one or more parameters.

2. The wearable device of claim 1, wherein the instructions, when executed by the processor, are configured to cause the wearable device to:
in response to the input, display the application screen in the area.

3. The wearable device of claim 2, wherein the instructions, when executed by the processor, are configured to cause the wearable device to:
in a state displaying the application screen which is a first application screen in the area, display a visual object to connect a second application screen to the area;
in response to another input associated with the visual object, move the second application screen to the area.

4. The wearable device of claim 2, wherein the instructions, when executed by the processor, are configured to cause the wearable device to:
in response to another input to connect another application screen distinguished from the application screen to the area, display the application screen and the another application screen in the area;
in response to another audio data corresponding to the another application screen, output, together with the audio signal through the speaker, another audio signal having the volume.

5. The wearable device of claim 2, wherein the instructions, when executed by the processor, are configured to cause the wearable device to:
display the application screen included in the area based on a transparency included in the one or more parameters.

6. The wearable device of claim 1, wherein the instructions, when executed by the processor, are configured to cause the wearable device to:
in response to another input gazing at the area longer than a preset duration, display a visual object to adjust the volume in the area;
in response to another input associated with the visual object, change the volume of the audio signal.

7. The wearable device of claim 1, wherein the instructions, when executed by the processor, are configured to cause the wearable device to:
identify a state of an external object corresponding to the area using a camera of the wearable device;
based on the state of the external object, change the one or more parameters.

8. The wearable device of claim 1, wherein the instructions, when executed by the processor, are configured to cause the wearable device to:
based on motion of a body part including a hand that is detected by using a camera of the wearable device, identify another input to form the area.

9. A method of a wearable device, comprising:
displaying, in a display of the wearable device, an application screen and an area in which one or more parameters to control the speaker of the wearable device are included;
identifying an input to connect the application screen and the area; and
in response to audio data corresponding to the application screen after identifying the input, outputting, through the speaker, an audio signal having a volume included in the one or more parameters.

10. The method of claim 9, wherein the identifying comprising:
in response to the input, displaying the application screen in the area.

11. The method of claim 10, further comprising:
in a state displaying the application screen which is a first application screen in the area, displaying a visual object to connect a second application screen to the area;
in response to another input associated with the visual object, moving the second application screen to the area.

12. The method of claim 10, further comprising:
in response to another input to connect another application screen distinguished from the application screen to the area, displaying the application screen and the another application screen in the area;
in response to another audio data corresponding to the another application screen, outputting, together with the audio signal through the speaker, another audio signal having the volume.

13. The method of claim 10, wherein the identifying comprising:
in response to the input, displaying the application screen in the area based on a transparency included in the one or more parameters.

14. The method of claim 9, further comprising:
in response to another input gazing at the area longer than a preset duration, displaying a visual object to adjust the volume in the area;
in response to another input associated with the visual object, changing the volume of the audio signal.

15. The method of claim 9, further comprising:
identifying a state of an external object corresponding to the area using a camera of the wearable device;
based on the state of the external object, changing the one or more parameters.
